# EUROPEAN PATENT SPECIFICATION

(11) **EP 1 340 527 B1**
(45) Date of publication and mention of the grant of the patent: **24.11.2004**
(21) Application number: 01954531.8
(22) Date of filing: 16.07.2001
(51) Int. Cl.: B01D 1/00, B01D 1/26

(54) **EVAPORATOR WITH HEAT SURFACE FORMED BY AN OPEN, DESCENDING CHANNEL IN THE SHAPE OF A CONCENTRIC SPIRAL**
VERDAMPFER MIT HEIZFLÄCHE, WELCHE DURCH EINEN OFFENEN, ABSTEIGENDEN KANAL IN FORM EINER KONZENTRISCHEN SPIRALE GEBILDET WIRD
EVAPORATEUR POURVU D'UNE SURFACE CALORIQUE FORMEE PAR UN CANAL OUVERT DESCENDANT EN FORME DE SPIRALE CONCENTRIQUE

(30) Priority: 17.07.2000 MX 0007013
(43) Date of publication of application: 03.09.2003
(73) Proprietor: Vallejo Martinez, Flor Nallelie, Mexico, D.F. 04400 (MX); Valleja Seyde, Arcadio Sergio, Mexico, D.F. 04400 (MX)
(72) Inventor: VALLEJA SEYDE, Arcadio, Sergio, Delegacion Coyoacan, México, D.F. 04400 (MX)
(74) Representative: Ponti Sales, Adelaida
(86) International application number: PCT/MX2001/000049
(87) International publication number: WO 2002/007847

(56) References cited:
- EP-A1- 0 520 097
- CH-A- 189 866
- ES-A- 372 783
- US-A- 3 930 958
- US-A- 4 202 846
- US-A- 4 225 538
- US-A- 4 256 674

## Description

### TECHNICAL FIELD

Chemistry Engineering, Oil Engineering, Sugar Engineering, Food Engineering, Process Engineering, Nuclear Engineering, Ecology, Unitary Operations, Mass and Energy Transmission, Heat Transmission, Water Treatment, Distillation, Steam Condensation, Liquor Boiling, Industrial Processing Equipment, Evaporation, Evaporators, Crystallization Evaporators.

### BACKGROUND OF THE INVENTION

Actually, the principal evaporators models used in the industry are Bed piping; Vertical piping; Forced circulation; Forced circulation with external heater; Large vertical tubes; Tubular falling film; Plates falling film. Generally they are formed by three principal parts: the bottom of the evaporator, the calandria o heating steam camera and the evaporator's vessel or steam produced camera. They generally, have an exit located in the upper part of the vessel, the produced steam can go to the atmosphere or to a condenser or it may be used to feed a calandria of another evaporator coupled with the first evaporator, in this case the calandria of the second evaporator functions as a condenser of the steam produced in the first evaporator, which also produces evaporation in the second unit, this produced steam can be used to feed the calandria of another evaporator, and so on until a limit which is fixed by the difference in the boiling temperature of the evaporating solution and the steam temperature used in the heating process, this serial evaporator arrangement is named Vacuum Multiple Effect Evaporation and it is used to increase power proficiency. Generally in the bottom of the evaporator the liquor or dilute solution to being evaporate is fed and also is located the exit of the concentrate solution or residual liquor; this part is joined hermetically to the calandria. The calandria or heating steam camera is a closed compartment integrated to the external and internal shells and the bottom and upper tube plates, these tube plates are the support for a great amount of pipings that cross over and are mandreled on themselves, this tubes have a certain large upon the evaporator model; The internal or external tube surface, forms the evaporator's heating surface, also it has the steam calandria entrances for the heating and the condenser exits and the exit of those uncondensers. Generally, the calandria is joined hermetically to the bottom and upper part of the vessel. The vessel or evaporator camera, is generally located over the calandria, in the upper part has the dragging or foam separator and the exit of the produced steam.
This kind of evaporators do the evaporation process in two steps: in the first one, inside the calandria they heat the liquor or evaporating solution to a temperature equal or higher from its boiling point, in the second step, by natural convection or conduction or using pumps they send the hot liquor to the evaporation camera or vessel in which the evaporation process is done in the interface area; they have a heating surface formed by tubes or plates and for their operation multiple technical factors take part, such as the heat transfer coefficient, the conduction, the convection, the boiling liquor circulation velocity over the heating surface, the increase of the boiling point owed to the hydrostatic pressure, the interface area steam - liquor, the chemical characteristic of the solution, the quality of the heating steam used. This evaporators can work isolated as simple effects or in serial in a multiple effect, in these case it is necessary a juncture between the evaporators pipes of large diameter allowing the steam exit, also tubes for the liquor or evaporated solution, tubes for the condensed solutions and tubes for the uncondensable gases, each evaporator or simple effect has to have their own valves and control systems and the appropriate instrumentation for measuring the pressure and temperature on each evaporator and in case a automated control of the whole operation. During the operation some dragging problems of the solution in the produced steam can happen or incrustations in the heating surface (pipes or plates) which require maintenance and proper cleaning.

The document CH-A-189866 describes an evaporator comprising a spiral evaporator plate with open channels.

### BIBLOGRAPHY

Upon evaporation and evaporators the following bibliography was consulted:
Chemical Engineering. Coulson and Richarson. Programon Press. 1963. Chap. 6, PPS. 151-229
Chemical Technology Encyclopaedia. Kirk Othmer UTEHA. 1962. Vol.7, PPS 560-581
Crystallization and Evaporation. G Del Tanago. Dossat. 1954. Chap. 2. PPS. 7-232
Handbook of Cane Sugar Engineering. E. Hugot. Elsevier. 1980. Chap. 31, PPS 348-458
Unit Operations in Chemical Engineering G. Brow. Marin 1970. Chap. 32 PPS 499-518
Sugar Cane Manual. Meade Chen. Limusa 1991. Chap. 9 PPS. 241-310
Chemical Engineer Manual. Perry & Chilton. McGrow Hill. 1982 Chap. 11 PPS. 29-44
Unit Operations Principles. Alan Faust. CECSA 1970 Chap 19. PPS. 449-429
Transport Process & Unit Operations. C.J. Geankopolis. CECSA 1989. Chap. 6 PPS. 405-429
Technology for Sugar Refinery. Oliver Lyle. Chapman & Hall. 1960. Chap. 12. PPS. 276-289.

And the following articles regarding the theme in technological magazines:
Cane and Sugar.- October 1962, PPS 48-50 The Forgotten Rillieux Principles. Multiple effect Evaporation and Juices Heating.
Alfred L. Webre, M.E., Jackson Industries Inc. Birmingham, Alabama.
Cane and Sugar.- January 1963, PPS 53-56 The Forgotten Rillieux Principles. Combining Evaporators and Boilers .
Alfred L. Webre, M.E., Jackson Industries Inc. Birmingham, Alabama.
Cane and Sugar.- October 1962, PPS 48-50 The Forgotten Rillieux Principles. Multiple effect Evaporation and Juices Heating.
Alfred L. Webre, M.E., Jackson Industries Inc. Birmingham, Alabama.

And the following commercial technical information:
Niro Group Technologies. January 1993. PPS. 22 and 27. Niro Publish A/S. Ole Andersen Denmark.
BMA Information April 1997, 35/ 1997. PPS. 21-23 Publish. Braunschweigishce Maschinenbauanstalt Ag. German Federal Republic.

The manufacturing process of this equipment and the high elements that take part in their build up, operation and the high value of qualified hand work in the assembling of so many pieces and parts, results that the price of this equipment is high; considering what we mentioned above and having as principal objectives the optimization of some of the mentioned technical factors, optimize the operation, save energy an water and to do the operation cheaper, we thought in a new evaporator development which has an open heat surface with a descendant concentric spiral channel, which we want to protect with the present patent request, though it is a new modular unit different of such mentioned above, that works more efficiently.

### CHARACTERISTICS AND FEATURES

The principal characteristics of this modular evaporator intended for general use are: It is build up of two main modules or evaporators which are assemble alternately in a number which depends in the working capacity of the equipment; each of this modules or basic evaporators is build up for two only parts which are: the calandria and its corresponding vessel, each calandria has the characteristic that its heat surface is build up by an open descendant concentric spiral channel (circular or rectangular) ; one of the modules of the channel goes from the periphery of the heat surface to the center and the other module of the channel goes from the center of the heat surface to the periphery, this allows that both, the heater and liquor evaporation or process solution is done simultaneously , though in the bottom and in the sides of the channel the evaporation occurs, the liquor or solution is conveniently heated and for the interface steam-liquid, i.e. by all the liquor surface; the slope or hydraulic gradient of the open channel, produces a liquid flow in direction of the descendant spiral and the steam produced in the module is used to heat the subsequent module, thus the evaporation system works in a vacuum multiple effect, allowing the following features:
First. Energy saving; the evaporation process is done with a minimum difference between the temperature of the liquor or evaporating solution and the steam, flow or heating element. It is not necessary to heat the liquor or solution to be evaporated until its boiling point thus it is only require a minimum increase in the temperature to increase the kinetic energy in the liquor molecules and get some of them flee as steam through the surface that is in touch with the gaseous phase.
Second. The liquor contact area with the gaseous phase is increased, thus the liquid surface that flows in the open channel is in touch in all moment with the gaseous phase, this allows the evaporated liquid molecules flee through all the interface area and moved out quickly, this increases the evaporation capacity by area, this is a difference with the conventional pipe evaporators in which the liquor or solution is heated with a temperature equal o little higher of its boiling point inside the tubes and until the liquor meets the final part of the tubes, gets in contact with the gaseous phase and the evaporation is done.
Third. Though to the descendant solution flow owe to the slope or hydraulic gradient of the open channel, that can be of 0.01 Mt by Mt up to 0.600 Mt. By Mt., the liquor circulation is increased above the heated surface optimizing the natural heat transmission owed to convection and conduction; thus the overall liquor film transmission heat coefficient is increased in the heating surface.
Fourth. Upon the slope or hydraulic gradient of the open channel, that can be of 0.01 Mt by Mt up to 0.600 Mt. By Mt. the thickness of the flow that circulates above the heating surface is relatively small thus a descendent film liquid effect is caused with a uniform flow.
Fifth. The evaporation is done continuously, thus the liquor or evaporating solution is in contact with the heating surface during all the process. As the liquor descends in a spiral form with a slope or hydraulic slope that can be of 0.01 Mt by Mt up to 0.600 Mt. By Mt depending in the liquor characteristics or process solution.
Sixth. The destruction of thermolabile substances, as it is not necessary to heat the liquor or evaporating solution until its boiling temperature, this reduces the risk of color increases in food products such as juices, concentrated by boiling point heating evaporation systems.
Seventh. Thus there are not any reheatings, the risks of dragging and incrustations of liquor, very common in the other kind of evaporators, are minimized.
Eight. Avoids the increment in the boiling temperature of the liquor related to the hydrostatic pressure, thus is an open channel with a calculated slope, the liquor surface level in the bottom of the channel is practically constant in each of the basic module evaporators.
Ninth. Upon the special design of each of the basic evaporator modules an its alternate assemble form, the evaporator works in a vacuum multiple effect evaporation system, in which the steam produced by the first evaporator unit feeds the calandria of the second evaporator unit, and the steam produced in this unit feeds the calandria of the next evaporating unit and so on, until the temperature differences between the heating steam and the liquor or evaporating solution allows it, or until the work pressure or the process requirements are met.
Tenth. For its design and the way the condensed are separated, this evaporator can be used as a distiller, separating the produced condensates in each module of the basic evaporator, this feature is very useful to obtain distilled or condensates water, distilled petroleum derivatives, in fuels separation, separation of essential oils, alcohol, etc.
Eleventh. Upon its design and the way the evaporation is done, this evaporator can also be used as a liquor or fed solution chiller, operating as a evaporative chiller, this feature is useful to chill warm water produced in some process and re use it or in defect, discharge the water to the drainage with a lower temperature.
Twelfth. With a proper installation feeding system of the saturated solution and of the supplementary entrances of steam, in some of the basic evaporator modules, this evaporator can process a over-saturated suspension of crystals y its mother waters using this feature for increasing the crystal size until the process requirements. Ex. Sugar crystals, mineral salt crystals, etc.
Thirteenth. Water saving, thus it operates in an evaporator multiple vacuum effect system, it saves the water needed for the condensation in the general condenser that is assembled in the steam outlet of the last module.

### DESCRIPTION OF THE INVENTION

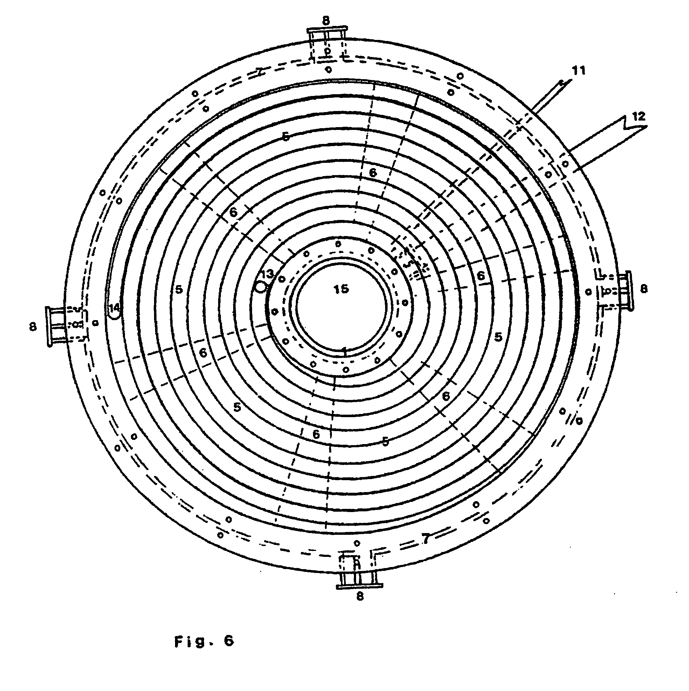

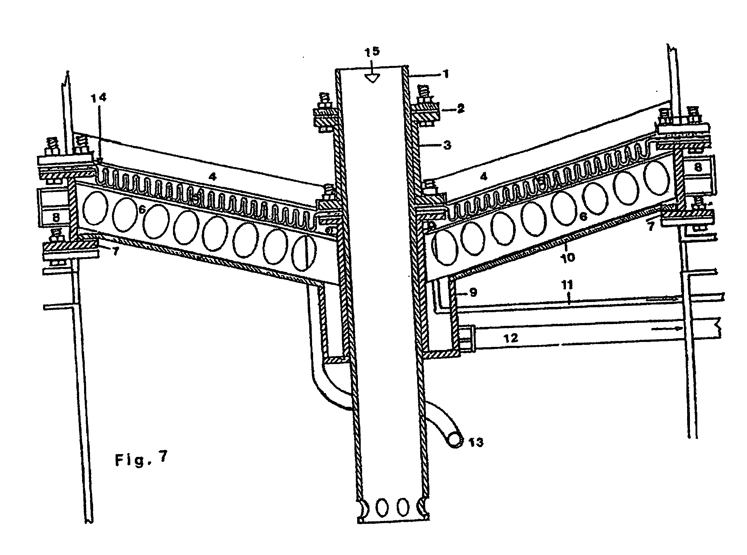

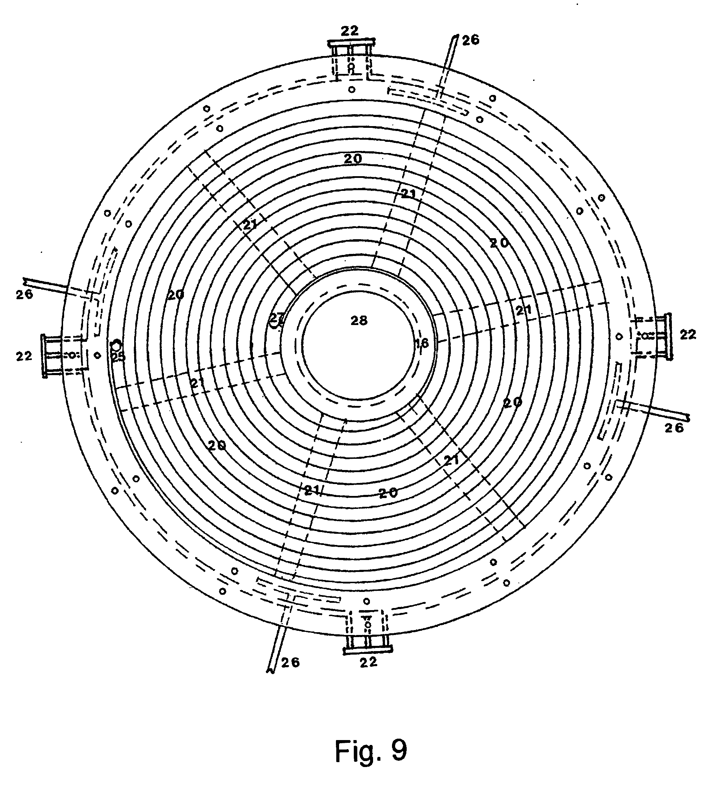

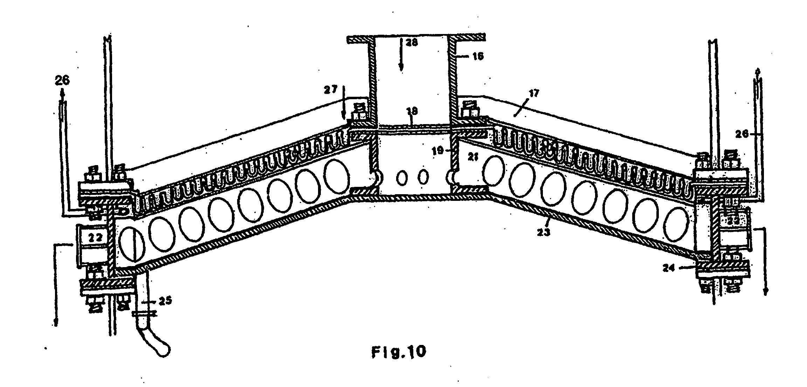

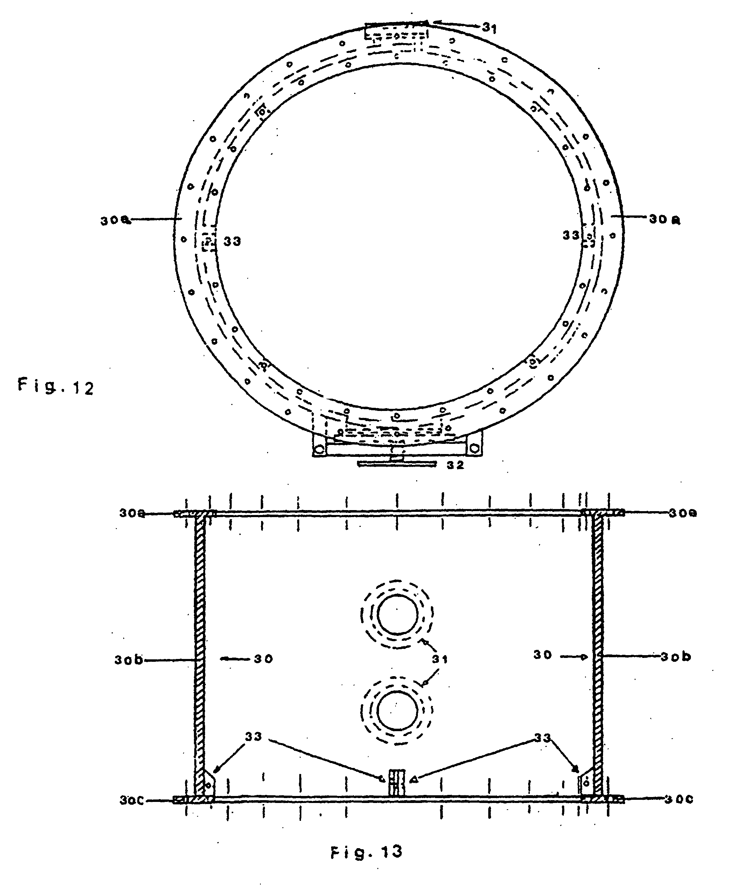

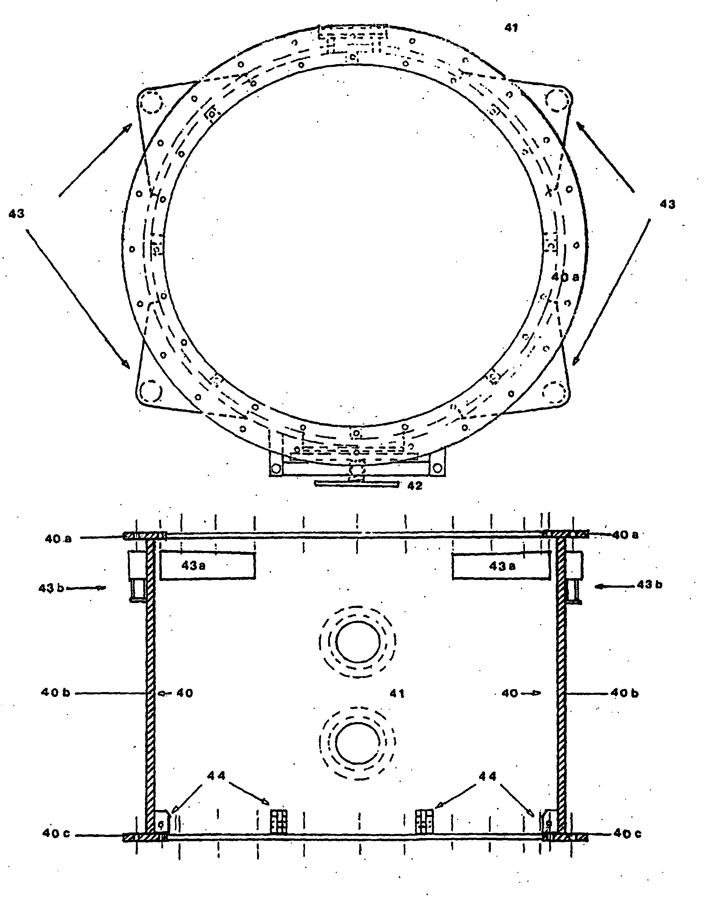

This invention concerns a modular evaporator according to claim 1 for general use, integrated by two modules or basic evaporators which heating surfaces are formed by an open channel build in a descendent concentric spiral shape with an adequate slope so the liquor or evaporating solution flows downward inside the channel, meanwhile is conveniently heated to simultaneously evaporate itself; in one of the modules the open channel goes from the periphery to the center of the module an in the other module the open channel goes form the center to the periphery. The steam produced in each module or basic evaporator is used to feed the calandria of the next module or basic evaporator, although this modular evaporator is a lonely unit, it works as a multiple effect evaporator system. The details of this novel evaporator are shown clearly in the following description and in the 19 diagrams that are annexed in 16 pages as figures with reference signs of the parts for each diagram.

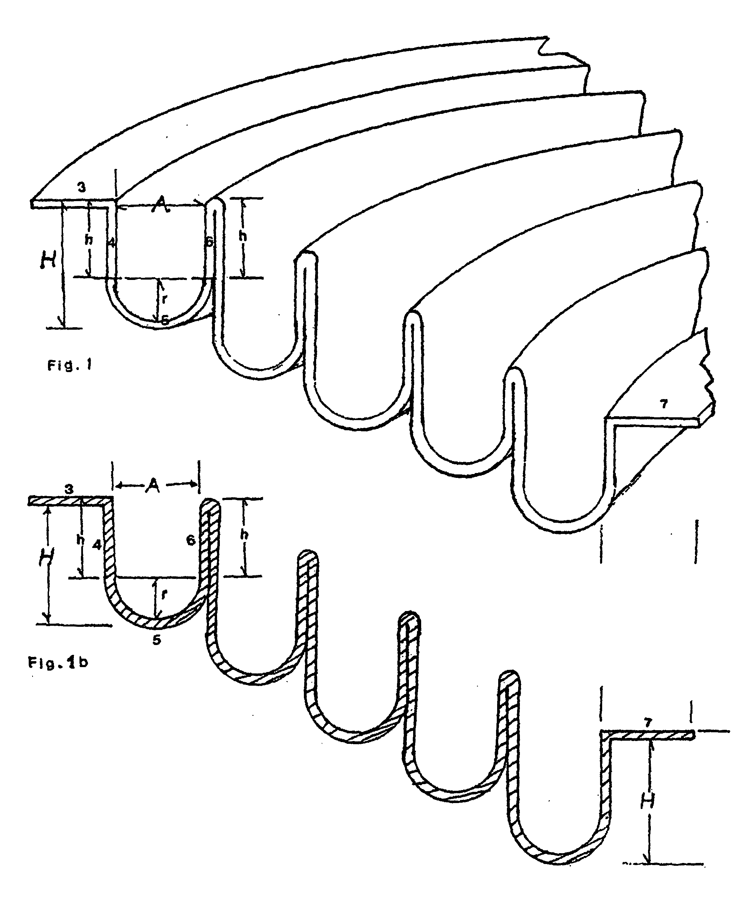

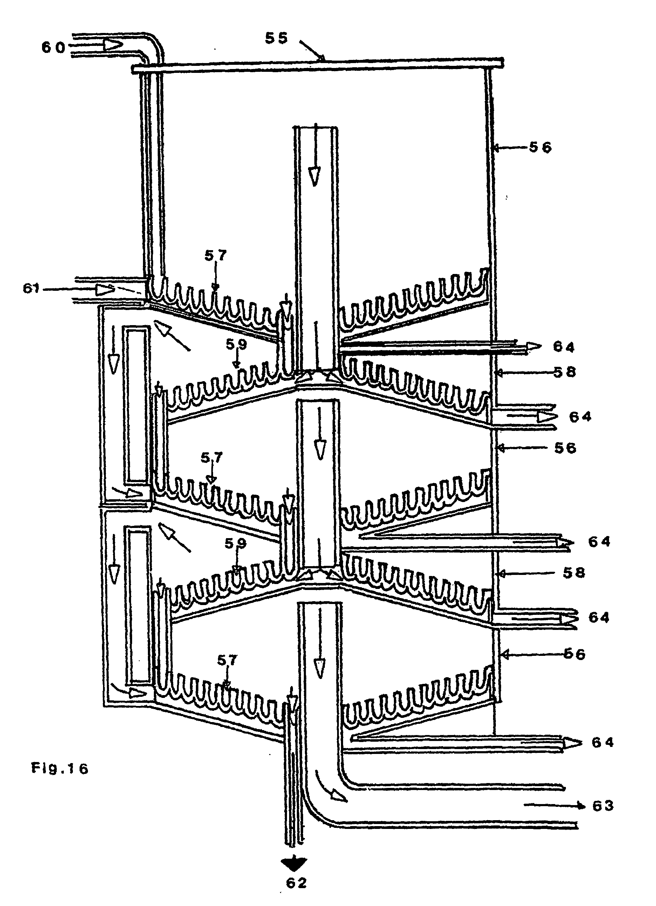

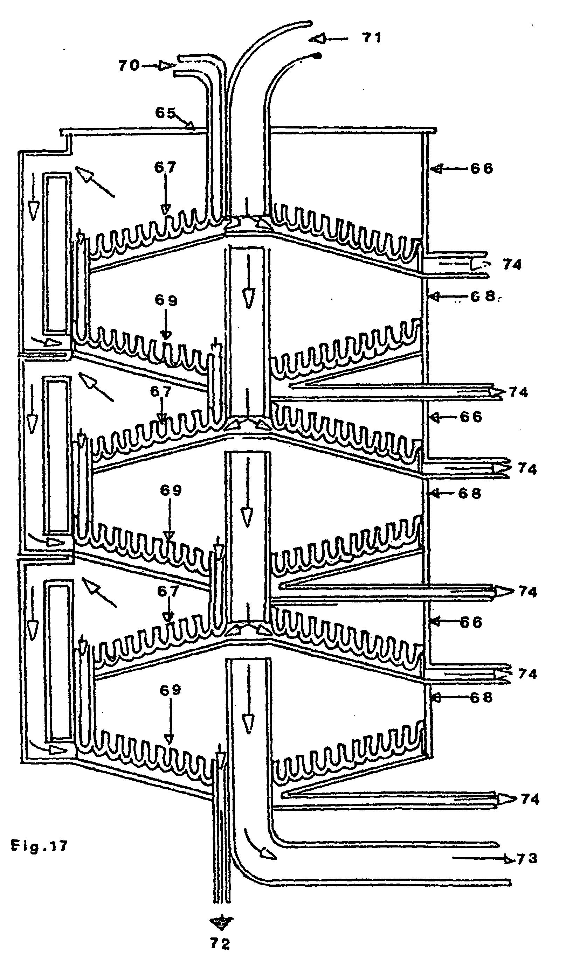

Figure 1 (Pp. 1/16) is a conventional free perspective of the open channel type with circular bottom, which is one of the three types of the channel which are considered as most appropriate for the building up the evaporator, this kind of channel is used preferentially when the evaporator has a circular section (Figs. 16 & 17, pp. 13/6 & 14/16), in Fig 1 (pp. 1/16) and in the transversal cut (fig. 1b, pp. 1/16) in both diagrams it is showed, how this open channel of circular bottom is build for three parts: the circular bottom ( Num. 5, fig. 1 and 1b, pp.1/16) and the two aside vertical shells ( Num. 4 &6, fig.1 and 1b, pp. 1/16), the dimensions depend upon the work capacity of the equipment and within the hydraulic gradient, generally the spin ratio of the circular bottom ( r, Figs. 1 & 1b) pp. 1/16) is half wide of the channel ( A, Figs. 1 and 1b, PPS. 1/16) and in the start of the spiral height ( h, fig. 1 and 1b, PP 1/16) it is the same in both lateral vertical shells; considering as minimum the wide of the channel ( A, fig 1, pp. 1/16), subsequently the lateral shell height in the descending spiral side increases upon the hydraulic gradient function. The open bottom circular channel starts in the internal edge of the heating surface upper support (num. 3 figs, 1 and 1b, pp. 1/160) and ends in the internal edge of the inferior support (num. 7 fig. 1 and 1b pp. 1/16) the length of the open channel depends on the total diameter of the structure and on the main tube diameter, in case of a circular evaporator or depends on the dimensions on length and width of the structure and main tube in case of a rectangular evaporator.

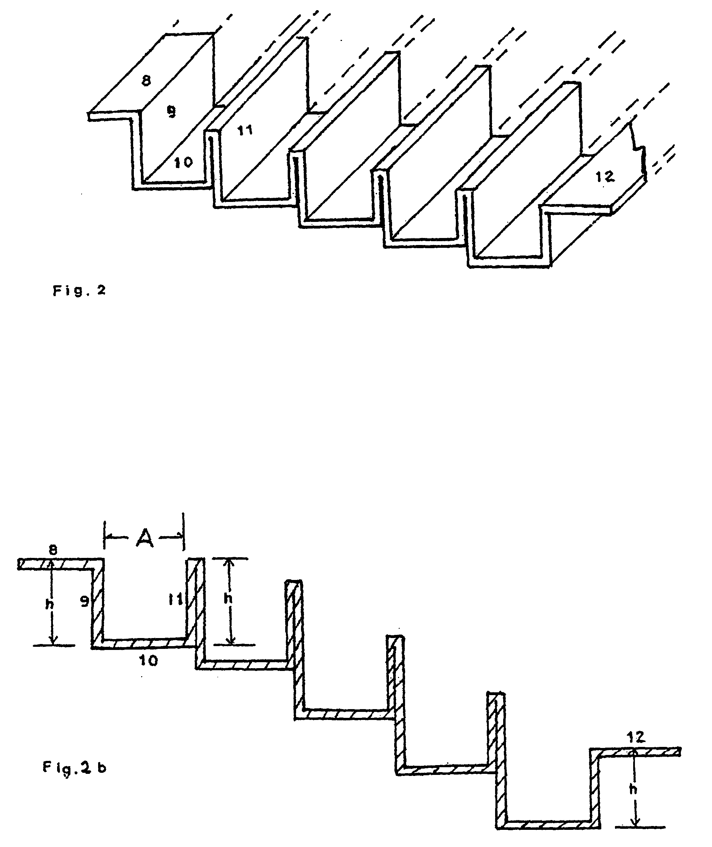

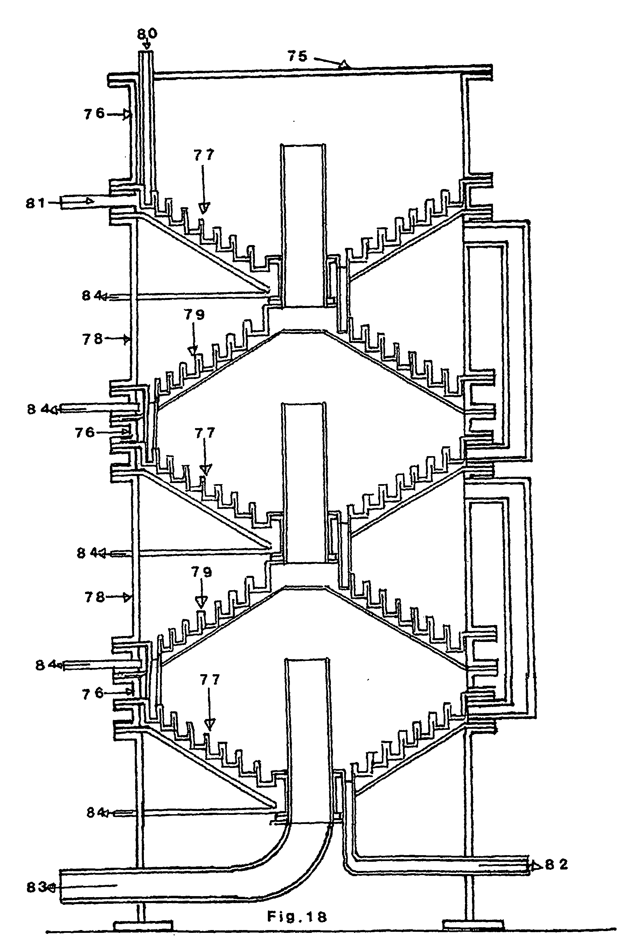

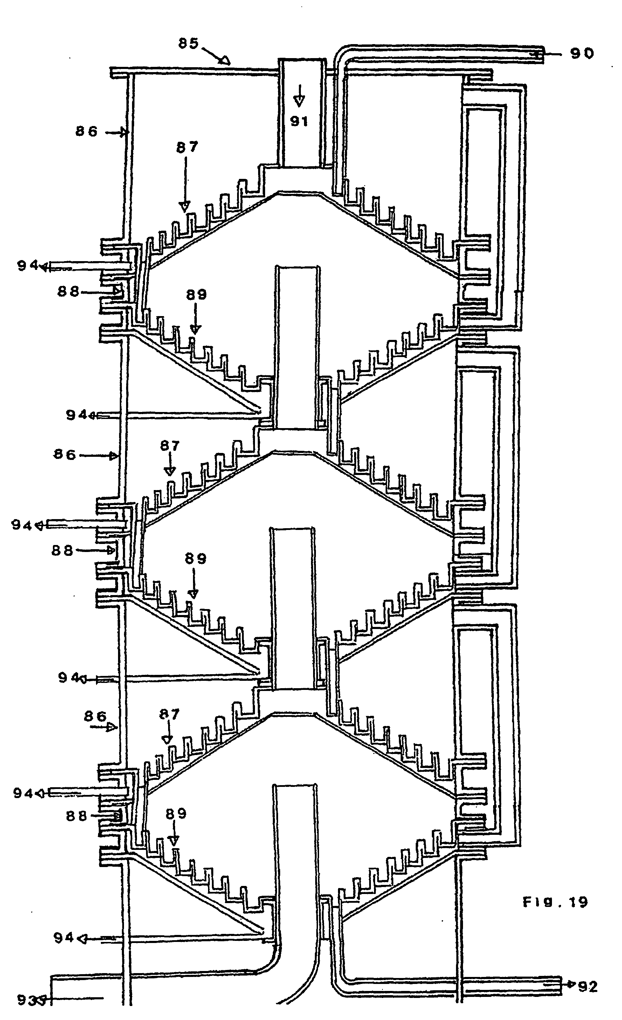

Fig. 2 (Pp. 2/16) shows a free conventional perspective of a flat bottom open channel, which is consider the best for this kind of evaporator, this kind of channel is used preferentially when the evaporator has a rectangular section (Figs. 18 and 19; PPS 15/16 and 16/16). In Fig. 2 (pp. 2/16) and in its transversal cut (Fig. 2b, pp. 2/16) and in both lateral shells (Num. 9 and 11; Figs 2 and 2b; pp. 2/16) the dimensions change depending on the work capacity of the equipment and upon the hydraulic work gradient, generally the width of the flat bottom open channel starts in the caloric upper support surface 's internal edge (num. 8, figs 2 and 2b; Pp. 2/16) and ends in the bottom support edge (num. 12, Figs., pp. 2/16) the channel length depends in the structure's total diameter and in the main tube diameter in case of a circular evaporator or in the case of a rectangular evaporator upon the width and length structure 's dimension and upon the width and length main tube's dimension.

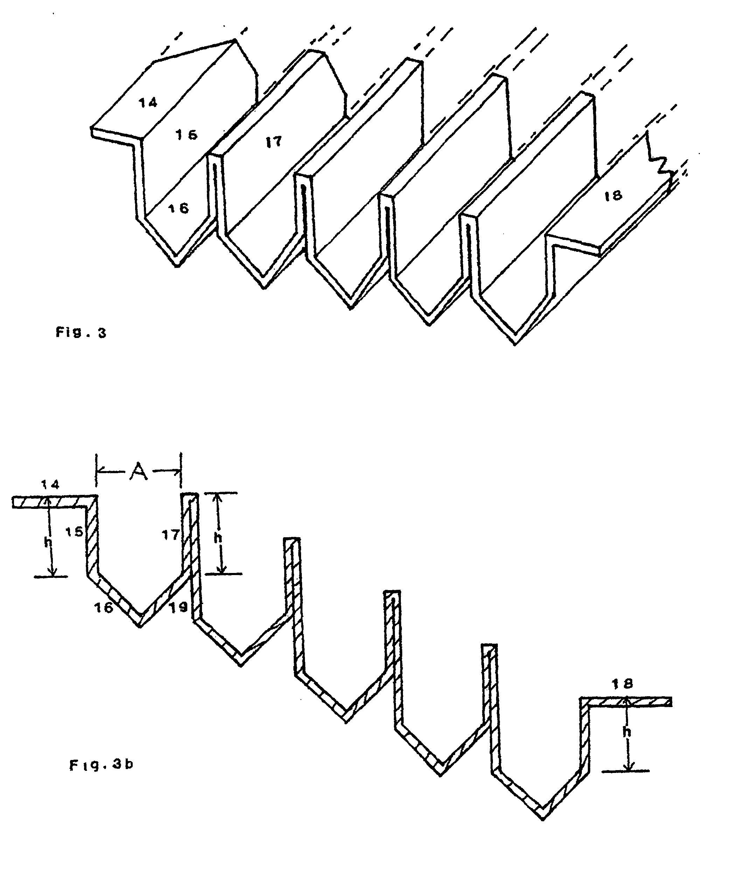

Fig. 3 (Pp. 3/16) is a free conventional perspective of a conic bottom open channel, and fig 3b is its transversal cut, this is a kind of channel recommended to be used on this kind of evaporator. This kind of channel is used preferentially on special cases in which the specific process material requires it, nevertheless a circular or rectangular section evaporator, can be used. The conic bottom open channel is formed by three parts, the conic bottom (Num. 16 and 19, Fig. 3 and 3b, Pp. 3/16) and two vertical lateral shells (Num. 15 and 17, Figs. 3 and 3 b; Pp. 3/. 16), that make and angle which depends on the kind of the process material and within the hydraulic gradient, the free edges of both sloped line sections, are joined to the vertical shells, the minimum shell's height is the width of the channel (A, Fig. 3 and 3b; Pp. 3/16) the dimensions of this sections vary upon the equipment's work capacity and hydraulic work gradient, the conic bottom channel starts on the upper edge of the heating surface (Num. 14, Figs. 3 and 3b, Pp. 3/16) and ends in the internal support edge ( Num. 18 fig. 3 and 3b, pp. 3/16); the channel length depends on the total structure diameter and of the main tube diameter in case of a circular evaporator or upon the structure's width and length and on the main tube length when it is the case of a rectangular evaporator.

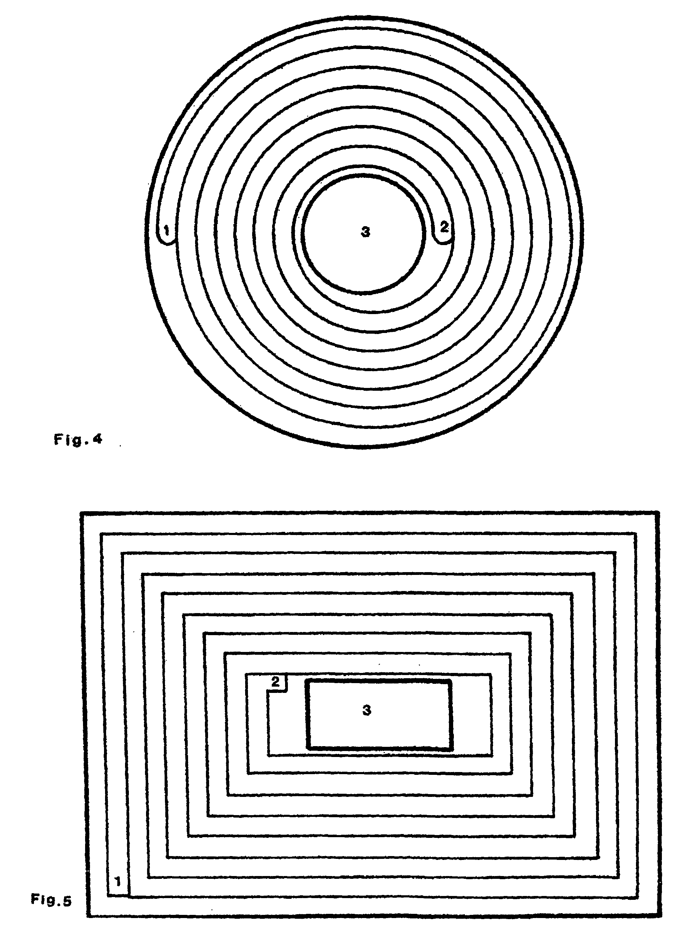

Fig. 4 (Pp. 4/16) is a diagram of a circular concentric spiral which has an open channel when it concerns to an evaporator of cylindrical external shape, the greatest circle is a plant view of the evaporator's vessel, showing the maximum internal diameter; the internal circle highlighted as number 3, represent the main tube on which the steam flows. When the liquor flow or evaporating solution goes from the periphery to the center, the spiral goes from point 1 to 2; when the liquor or evaporating solution flow goes from the center to the periphery, the spiral goes from point 2 to 1.
Fig. Num. 5 (Pp. 4/16) is a diagram of a rectangular or square concentric spiral which has an open channel, when it concerns to a rectangular shape evaporator. The bigger rectangle represents the vessel's plant view showing the internal dimensions in width and length, the internal rectangle highlighted as 3 is the internal tube plant view on which the steam flows. When the liquor flow or evaporating solution goes from the periphery to the center, the spiral goes from point 1 to 2; when the liquor or evaporating solution flow goes from the center to the periphery, the spiral goes from point 2 to 1.
Fig. Num. 6 (Pp. 5/16) is a diagram of the calandria 's basic module view plant in the evaporator with an open channel heating surface with circular bottom in an spiral descendent shape and with a liquor or evaporating solution that flows from de periphery to the center, numbering its principal parts as it follows: main tube number 1, heating surface number 5, the separating supports, below the heating surface, with number 6, the calandria's external shell with number 7, the uncondensers number 11, the condensers outlet number 12, the concentrate solution outlet number 13, the inlet of the dilute solution number 14 an the produced steam outlet number 15.
Fig. Num. 7 (Pp. 6/16) is the diagram of a transversal cut view of the calandria of one module in the basic circular evaporator with an open channel heating surface with circular bottom in an spiral descendent shape and with a liquor or evaporating solution that flows from de periphery to the center, numbering its principal parts as it follows: the main tube number 1, the joints number 2, the main tube support number 3, the upper pawls number 4, the open channel heating surface and circular bottom number 5, the separate supports number 6, the calandria's external shells number 7, the couple in the steam inlet number 8, the calandria's internal part number 9, calandria's bottom cover number 10, uncondensable gases outlet number 11, the condensers outlet number 12, the concentrate solution outlet number 13, diluted solution inlet number 14, the produced steam outlet number 15.
Fig. Num. 8 (pp. 7/16). Is a free conventional calandria diagram in one basic evaporator module in the basic circular evaporator with an open channel heating surface with circular bottom in an spiral descendent shape, and with a liquor or evaporating solution that flows from de periphery to the center; this to show the way the different parts of the calandria are assembled and of their components on each part. The parts have the same numbering as Fig. 6 (Pp. 5/16) and 7 (Pp. 6/16), their components are labeled with the corresponding number to the particular part with a letter.
Fig. Num. 9 (Pp. 8/16) is the upper view plant of the calandria in one of the modules in the basic circular evaporator with an open channel heating surface with circular bottom in an spiral descendent shape, and with a liquor or evaporating solution that flows from the center to the periphery, we numbered it parts as follows: the central tube support guide bar number 16, the heating surface number 20, the separation supports beneath the heating surface number 21, the external shell of the calandria number 24, the calandria's steam feed inlet number 28, the uncondensable gases outlet number 26, the joints for the condensers outlets number 22, the concentrated solution outlet number 25, and the inlet for the diluted solution number 27.
Fig. Num. 10 (Pp. 9/16) is the calandria transversal view cut in one of the modules in the basic circular evaporator with an open heating surface channel with circular bottom in an spiral descendent shape and with a liquor or evaporating solution that flows from the center to the periphery, we numbered it parts as follows: the central tube support guide bar number 16, the upper separator number 17, the heating surface with open channel and circular bottom number 20, the separation supports number 21, the calandria's external shell number 25, the joints for the condensers outlets number 22, the internal shell of the calandria number 19, the calandria's bottom cover number 23, the uncondensable gases outlet number 26 the concentrated solution outlet number 25, and the inlet for the diluted solution number 27, the steam feed inlet to the calandria number 28.
Fig. Num. 11 (Pp. 10/16) is the free conventional diagram of the calandria in one of the modules of the basic circular evaporator with an open heating surface channel with circular bottom in an spiral descendent shape and with a liquor or evaporating solution that flows from the center to the periphery, this to show the way the different parts of the calandria are assembled and also to know their components of each part. The parts have the same numbering as Fig. 9 (Pp. 8/16) and 10 (Pp. 9/16), their components are labeled with the corresponding number to the particular part with letter.
Fig. Num. 12 (Pp. 11/16) is a section plant view of the vessel's evaporator which is place back to the upper part of the calandria, in one of the modules of the basic circular evaporator with an open heating surface channel with circular bottom in an spiral descendent shape and with a liquor or evaporating solution that flows from the periphery to the center, we numbered it parts as follows: the complete evaporator's vessel section number 30, the cylindrical vessel's upper flange number 30a, the sight glasses number 31, the operator's entrance number 32, the calandria's upper separation supports ( Num. 4 Fig. 7, Pp. 6/16) are labeled with number 33.
Fig. Num. 13 (Pp. 11/16) is a transversal cut view of a vessel's evaporator section which is place back to the upper part of the calandria, in one of the modules of the basic circular evaporator with an open heating surface channel with circular bottom in an spiral descendent shape and with a liquor or evaporating solution that flows from the periphery to the center we numbered it parts as follows: the complete cylindrical evaporator's vessel number 30, the cylindrical vessel's upper flange number 30a, the shell of the cylindrical vessel part number 30 b, the lower vessel's flange number 30 c, the sight glasses number 31, , the calandria's upper separation supports ( Num. 4 Fig. 7, Pp. 6/16) are labeled with number 33.
Fig. Num. 14 (Pp. 12/16) is a transversal cut view of a vessel's evaporator section which is place back to the upper part of the calandria; in one of the modules of the basic circular evaporator with an open heating surface channel with circular bottom in an spiral descendent shape and with a liquor or evaporating solution that flows from the center to the periphery we numbered its parts as follows: the complete evaporator vessel number 40, the upper flange of the cylindrical vessel number 41, the operator's entrance number 42, the calandria's upper separators supports, ( Num. 17, Fig. 10, Pp. 9/16) are labeled with number 44.
Fig. Num. 15 (Pp. 12/16) is a transversal cut view of a vessel's evaporator section which is place back to the upper part of the calandria; in one of the modules of the basic circular evaporator with an open heating surface channel with circular bottom in an spiral descendent shape and with a liquor or evaporating solution that flows from the center to the periphery we numbered it parts as follows: the complete evaporator vessel number 40, the upper flat flange number 40a, the cylindrical shell number 40b, the lower flat flange number 40c, the sight glasses number 41, the calandria's upper separators supports, ( Num. 17, Fig. 10, Pp. 9/16) are labeled with number 44.
Fig. Num. 16 (Pp. 13/16) is a transversal cut view of a vessel's evaporator section which is place back to the upper part of the calandria in one of the modules of the basic circular evaporator with an open heating surface channel with circular bottom in an spiral concentric descendent shape, which has an structural arrange that starts from the upper part and goes down in one evaporator's basic module in which the liquor or evaporating solution flow goes from de periphery to the center, followed by a second evaporator's basic module in which the liquor or evaporating solution flow goes from the center to the periphery, and then a third module as the first one and subsequently we can place back so many modules upon requirements, the parts are numbered as follows: the evaporator's up cover number 55, the vessel's section place back to the upper part of the calandria with a flow from the periphery to the center, ( figs. 12 and 13, Pp. 11/16) number 56, the calandria with a flow that goes from the periphery to the center, ( figs. 6, 7, and 8; Pp. 5/16, 6/16 and 7/16) number 57; the vessel's section place back to the upper part of the calandria with a flow from the center to the periphery , ( Figs. 14 and 15, Pp. 12/16) number 58; the calandria with a flow from the center to the periphery, ( figs. 9, 10 and 11, Pp. 8/16, 9/16 and 10/16) number 59; the liquor or evaporating solution inlet number 60, the steam feed inlet to the first calandria number 61, the concentrate solution outlet number 62, the produced steam outlet on the last module of the basic evaporator which goes directly to the condenser, number 63, the outlets of the condensers in each calandria with their corresponding uncondensable gases outlet is number 64.
Fig. Num. 17 (Pp. 14/16) is a vessel's evaporator section transversal cut view, which is place back to the upper part of the calandria in one of the modules in the basic circular evaporator with an open channel heating surface with circular bottom in an spiral concentric descendent shape, which has an structural arrange that starts from the upper part and goes down in one evaporator's basic module in which the liquor or evaporating solution flow goes from the center to the periphery, followed by a second evaporator's basic module in which the liquor or evaporating solution flow goes from the periphery to the center, and then a third module as the first one and subsequently we can place back so many modules upon requirements, the parts are numbered as follows: the upper evaporator's cover number 65, the vessel's section placed back to the upper part of the calandria with a flow from the center to the periphery , ( Figs. 14 and 15, Pp. 12/16) number 66, the calandria with a flow from the center to the periphery, ( figs. 9, 10 and 11, Pp. 8/16, 9/16 and 10/16) number 67; the vessel's section placed back to the upper part of the calandria with a flow from the periphery to the center , ( Figs. 12 and 13, Pp. 11/16) number 68; the calandria with a flow from the periphery to the center, ( figs. 6, 7 and 8, Pp. 5/16, 6/16 and 7/16) number 69; ; the liquor or evaporating solution inlet number 70, the steam feed inlet to the first calandria number 71, the concentrate solution outlet number 72, the produced steam outlet on the last module of the basic evaporator which goes directly to the condenser, number 73, the outlets of the condensers in each calandria with their corresponding uncondensable gases outlet is number 74.
Fig. Num. 18 (Pp. 15/16) is a rectangular vessel evaporator transversal cut view with an open heating surface channel with a flat bottom (Fig. 2 and 2b; Pp. 2/16) in an spiral rectangular concentric descendent shape (Fig. 5, Pp. 4/16), which has an structural arrange that starts from the upper part and goes down in one evaporator's basic module in which the liquor or evaporating solution flow goes from de periphery to the center, followed by a second evaporator's basic module in which the liquor or evaporating solution flow goes from the center to the periphery, and then a third module as the first one and subsequently we can place back so many modules upon requirements, the parts are numbered as follows: the evaporator's up cover number 75, the vessel's section place back to the upper part of the calandria with a flow from the periphery to the center number 76, the calandria with a flow that goes from the periphery to the center number 77; the vessel's section place back to the upper part of the calandria with a flow from the center to the periphery , number 78; the calandria with a flow from the center to the periphery, number 79; the liquor or evaporating solution inlet number 80, the steam feed inlet to the first calandria number 81, the concentrate solution outlet number 82, the produced steam outlet on the last module of the basic evaporator which goes directly to the condenser, number 83, the outlets of the condensers in each calandria with their corresponding uncondensable gases outlet is number 84.
Fig. 19 (Fig. 16/16) is a rectangular vessel evaporator with an open heating surface channel of flat bottom transversal cut view of a in an spiral rectangular concentric descendent shape, which has an structural arrange that starts from the upper part and goes down in one evaporator's basic module in which the liquor or evaporating solution flow goes from the center to the periphery, followed by a second evaporator's basic module in which the liquor or evaporating solution flow goes from the periphery to the center, and then a third module as the first one and subsequently we can place back so many modules upon requirements, the parts are numbered as follows: the upper evaporator's cover number 85, the vessel's section place back to the upper part of the calandria with a flow from the center to the periphery , number 86, the calandria with a flow from the center to the periphery, number 87; the vessel's section place back to the upper part of the calandria with a flow from the periphery to the center , number 88; the calandria with a flow from the periphery to the center, number 89; the liquor or evaporating solution inlet number 90, the steam feed inlet to the first calandria number 91, the concentrate solution outlet number 92, the produced steam outlet on the last module of the basic evaporator which goes directly to the condenser, number 93, the outlets of the condensers in each calandria with their corresponding uncondensable gases outlet is number 94.

Upon the figures mentioned above, we state that the evaporator with an open descendent channel in spiral concentric shape, as its heating surface, (Fig. 16, Pp. 13/16; Fig. 17, Pp. 14/16; Fig 18; Pp. 15/16 and Fig. 19; Pp. 16/16), is a modular evaporator build by the connection of two modules or basic evaporators, in one of them the open descendent spiral concentric channel goes from the module periphery to its center (Fig. 6, 7 and 8 Pp. 5/16, 6/16 and 7/16), consequently the liquor or evaporating solution feed flow goes from the periphery to the center, and in the second module the open descendent spiral concentric channel goes from the center of the module to its periphery, ( Figs. 9,10 and 11, Pp. 8/16, 9/16 and 10/16) consequently the liquor or evaporating solution feed flow goes from the center to its periphery, this modules or basic evaporators, which will be describe forwardly, are alternately assembled in such way that the produced steam on each evaporator can be used to feed the calandria of the next basic evaporator and finally in the last module the produced steam goes through a condenser; all this procedure is integrated in one equipment which external shape will depend on the spiral heating surface used in the basic evaporator; though we have two different spiral types, one is the spiral descendent circular concentric that is shown in Fig. 4 ( Pp. 4/16) on which we can see that when the circular concentric spiral goes from the periphery to the center of the channel is descending from the point 1 to the point 2 and when the circular concentric descendent spiral goes from the center to the periphery the channel descends from 2 to1, being the circular area labeled with 3 in Fig. 4 ( Pp. 4/16) where the central steam tube goes through. When the descendent circular spiral shown in Fig. 4 (Pp. 4/16) is used the external evaporator modular shape will be a straight circular cylinder. The other usable spiral is the rectangular concentric descendent, shown in Fig. 5 (Pp. 4/16), on which we can see that when the rectangular concentric spiral goes from the periphery to the center of the channel is descending from point 1 to 2 and when the rectangular concentric descendent spiral goes from the center to the periphery the channel descends from 2 tol, being the rectangular area labeled with 3 in Fig. 5 (Pp. 4/16) where the central steam tube goes through. In this case the external evaporator modular shape will be a straight rectangular parallelepiped.

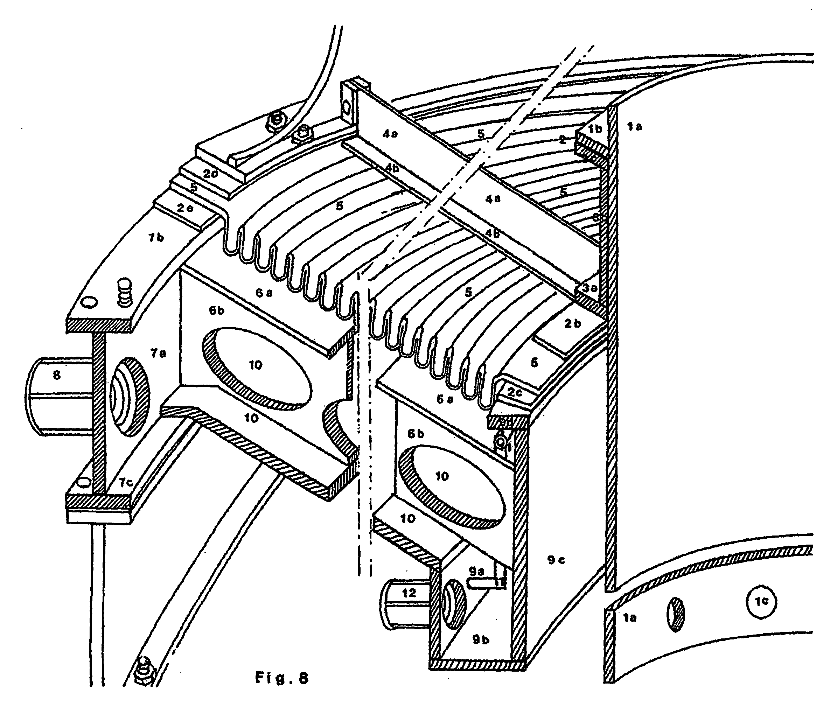

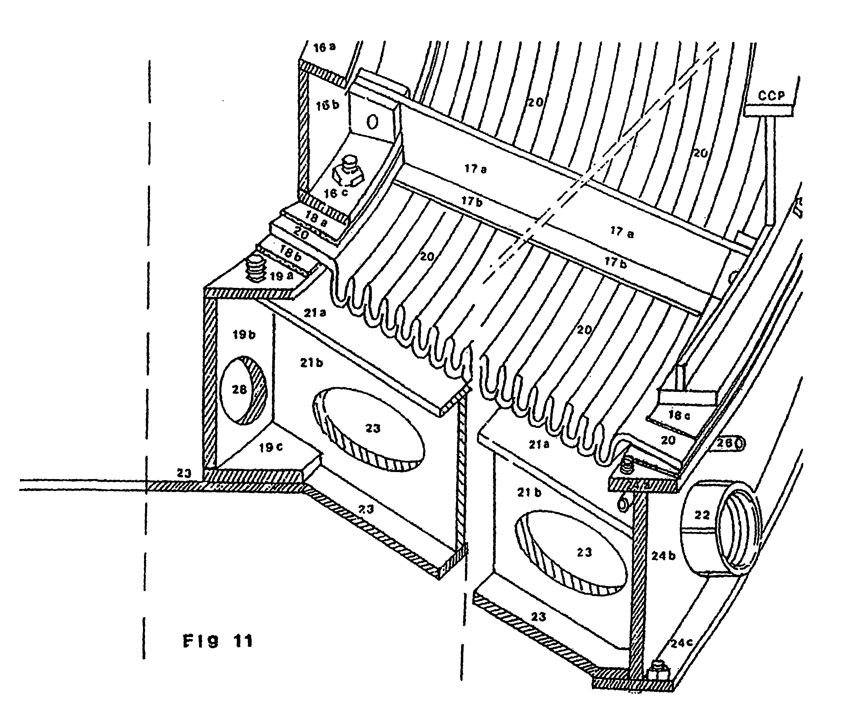

Each basic evaporator is build by two parts, which are: the calandria and the vessel section, which is place back to the calandria's upper part. We have two different basic evaporators: one is where the liquor or evaporating solution flows from the periphery (Num. 1, Figs. 4 and 5, Pp. 4/16) to the center (Num. 2, Figs 4 and 5, Pp. 4/16) and which will be named forwardly as basic evaporator periphery - center, and the other basic evaporator, on which liquor or evaporating solution goes from the center (Num. 2, Fig 4 and 5 4/16) to the periphery (Num. 1, Fig 4 and 5, Pp. 4/16) will be named forwardly basic evaporator center- periphery. The basic evaporator periphery - center is build by a calandria with a liquor or evaporating solution flow from the periphery to the center as shown in Fig. 6,7 and 8 (Pp. 5/16, 6/16 and 7/16) on which is place back the vessel section shown in Fig. 12 and 13 (Pp. 11/16). The calandria, upon its design, works as the bottom of the basic evaporator. The calandria of the basic evaporator periphery - center, as shown in fig. 5 (Pp. 5/16), Fig. 7 (Pp.6/16) and Fig. 8 (Pp. 7/16), is build by four main parts: the calandria body, the separators supports, the calandria's cover or heating surface periphery - center and the central tube, this parts are joined hermetically. The calandria body as shown in fig. 7 (Pp. 6/16) consists by an external shell (Num. 7, Fig 7, Pp. 6/16 and Num. 7a, 7b and 7c, Fig. 8 Pp. 7/16) welded on its whole perimeter to the bottom of the calandria (Num.10, Fig. 7 Pp. 6/16 and 7/16) and it also has welded the feed steam entrances (Num. 8, Figs. 6, 7 and 8 Pp. 5/16, 6/16 and 7/16), the bottom of the calandria (Num. 10, Figs. 7 and 8, Pp. 6/16 and 7/16) which is an inverted truncated cone shape piece welded in its small perimeter base to the internal shell of the calandria ( Num. 9, Figs. 7 and 8, Pp. 6/16 and 7/16) making a cylindrical receptacle to receive the condensers, which are eliminated by the outlet condenser pipe ( Num. 12, Figs. 6, 7 and 8; Pp. 5/16, 6/16 and 7/16) from the joint that is welded to the internal shell ( Num. 9a, Fig. 8 Pp. 7/16) , the condensers pipe crosses the vessel's evaporator shell from the center to the periphery and goes to the exterior part of the evaporator where a control valve is located and functions as a condenser reservoir, the heat steam uncondensable gases are eliminated by a specific pipe that crosses the internal calandria shell and the vessel evaporator's section center - periphery and goes to the exterior where a control valve allows them to escape to the atmosphere or sends them to a general condenser, depending on the work pressure. The separator supports have a "T" shape with equal branches, (Num. 6, Fig. 6, 7 and 8, Pp. 5/16, 6/16 and 7/16) 1 the "T" axis (Num. 6 b, Fig. 8, Pp. 7/16) has some circular perforations, which allows a free steam circulation, and it is welded by its bottom and by its large to the bottom of the calandria, the area formed by the "T" arms (Num. 6a, Fig. 8, Pp. 7/16) functions as support to the heating surface or calandria's cover. The heating surface is the calandria cover, which is a piece (Num. 5; Fig. 6, 7 and 8; Pp. 5/16, 6/16 and 7/16) that start s from a wide flat edge, where the exterior shell of the calandria is assembled (Num. 7 and 7b; Figs. 7 and 8; Pp. 6/16 and 7/16), and with the vessel of the evaporator periphery - center (Num. 30c; Fig. 13; Pp. 11/16) and continues in an inverted truncated cone shape that ends in the wide flat edge where the internal shell of the calandria is assembled (Num. 9d; Fig. 8 Pp. 7/16) and the central tube support ( Num. 3 and 3a; Figs. 7 and 8; Pp. 6/16 and 7/16), we can see the build up diagram in Fig. 7 and 8 ( Pp. 6/16 and 7/16) , we can see from Fig. 6 a plant view ( Pp. 5/16) that the descendent circular concentric spiral channel that goes from the periphery ( Num. 14; Fig. 6 Pp. 5/16) to the center ( Num. 13; Fig. 6; Pp. 5/16) , being the open descendent channel of rectangular type with circular bottom, as we can see in Fig. 7 and 8 (Pp. 6/16and 7/16) , the calandria cover is sustained on its bottom over the separators supports ( Num. 6, Fig. 7 and 8; Pp. 6/16 and 7/16). As part of the calandria's assemble the basic evaporator periphery - center, we have the central tube (Num. 1; Fig. 6,7, and 8; Pp. 5/16, 6/16 and 7/16) which is located in the center of the calandria and sustained by the central tube support (Num. 3; Fig. 7 and 8; Pp. 6/16 and 7/16), this support is assembled with the internal part of the calandria and with it cover hermetically, we also have as part of the calandria periphery - center the upper flanges (Num. 4: Fig. 7 and 8; Pp. 6/16 and 7/16) which are equal "T" branches inverted over the conic part of the cover and fixed in the edges of the "T' axis by locks or screws to the supports, which are in one side of the vessel's evaporator bottom periphery - center ( Num. 33 : Fig. 13: Pp. 11/16) and by the other side in the central tube support shell ( Num. 3; Figs 7 and 9 Pp. 6/16 and 7/16) . The upper flanges work to avoid deformations on the calandria's cover. The calandria periphery - center, is a close container where the feed steam which flows from its specific inlet (Num. 8; Figs. 6, 7 and 8; Pp. 5/16, 6/16 and 7/16), is distributed along de calandria through the separate support holes (Num. 6; Fig. 6, 7 and 8; Pp. 5/16, 6/16 and 7/16), heats the bottom of the calandria's cover or heating surface, on this procedure looses heat, which is condensed and converted to condensed water which is recollected in the center of the calandria and exits by the condensers outlet (Num. 12; Fig. 6, 7 and 8; Pp. 5/16, 6/16 and 7/16); meanwhile the uncondensed gases with the heated steam are also recollected and are removed by the uncondensed gases outlet (Num. 11; Fig. 6, 7 and 8; Pp. 5/16, 6/16 and 7/16). By the upper part of the calandria's cover or heating surface, where the channel starts (Num.14; Fig. 6 and 7; Pp. 5/16 and 6/16), is fed in a tangential way to itself, the liquor or evaporating solution which flows following the descendent channel until gets to the point (Num. 13; Figs. 6 and 7, Pp. 5/16 and 6/16) where the channel ends in a vertical tube, therefore after crossing the bottom of the calandria does an extensive elbow of 90° and then an arch with a lateral circle of approximately 180^{a} descending and placed back by a reduction in the end of the bayonet to the point ( Num. 27; Fig 9 and 10; Pp. 8/16 and 9/16) where the next calandria's descendent channel starts, in a way that the flow of the feeding liquor is tangential to the bottom surface of the channel, passing the liquor from a basic evaporator to another. On its way over the evaporator's heating surface periphery - center, the liquor evaporates and produces steam which is recollected in the basic evaporator vessel periphery - center section (Fig. 12 and 13; Pp. 11/16) and goes to the central tube (Num. 1; Fig. 6, 7 and 8; Pp. 5/16, 6/16 and 7/16) to feed the calandria of the next basic evaporator. The vessel of the basic evaporator placed to the calandria periphery - center is a straight tubular circular cylinder (Num. 30; Fig. 12 and 13; Pp. 11/16) which has on its bottom a joining clamp to the calandria (Num. 30c; Fig. 1; Pp. 11/16) and on its upper part another clamp (Num. 30a. Fig. 12 and 13; Pp. 11/16) which can be placed to the upper cover of the modular evaporator, or to the bottom of the basic evaporator calandria, that from up and down precedes it, on its lateral shell (Num. 30 b; Fig. 13; pp. 11/16) has one or two sight glasses (Num. 32; Fig. 12; Pp. 11/16) to observe the equipment interior and in some cases depending on the equipment size has also an operator's entrance (Num. 32; Fig. 12, Pp. 11/16); In the internal edge of the bottom clamp (Num. 30c; Fig. 13 Pp. 11/16) has the supports ( Num. 33; Fig. 13; Pp. 11/16) for the calandria periphery- center upper flanges ( Num. 4; Fig. 7 and 8 Pp. 6/16 and 7/16) . The objective of the basic evaporator periphery - center vessel; is to have a camera, where the produced steam momentarily is stored before exiting (Num. 15, Fig. 6 and 7 Pp. 5/16 and 6/16) through the central tube (num. 1; Fig. 6, 7 and 8; Pp. 5/16, 6/16 and 7/16) to the next module. Each basic evaporator center - periphery is build by two parts, which are: the calandria and the vessel section, which is place back to the calandria's upper part. The calandria, upon its design, works as the bottom of the basic evaporator. The calandria of the basic evaporator center - periphery, as shown in fig. 9 (Pp. 8/16), Fig. 10 (Pp.9/16) and Fig. 11 (Pp. 10/16), is build by four main parts: the calandria body, the separators supports, the calandria's cover or heating surface center - periphery and the central tube, this parts are joined hermetically. The calandria body, as shown in fig10 (Pp9/16), consists in an external shell (Num. 24, Fig 10, Pp. 9/16 and Num. 24a, 24b and 24c, Fig. 11 Pp. 10/16) welded on its whole perimeter to the bottom of the calandria (Num.23, Fig. 10 Pp. 9/16 and Num. 23, Fig. 11, Pp. 10/16) and it also has welded the joints for the condensable exits (Num. 22, Fig 9, 10, and 11, Pp. 8/16), 9/16 and 10/16) which go by a pipe with its control valve to the condensers storage out of the evaporator. The bottom of the calandria (Num. 23, Figs. 10 and 11, Pp. 9/16 and 10/16) is a truncated cone shape piece welded in its small perimeter base to the internal shell of the calandria (Num. 19, Figs. 10 and 11, Pp. 9/16 and 10/16) making a cylindrical receptacle where the central tube is located (num. 1; Fig 6, 7 and 8; Pp. 5/16, 6/16 and 7/16), where the feed steam enters to the system passing among the internal shell 's entrances (Num. 28; Fig 10 and 11; Pp. 9/16 and 10/16), the feeding steam uncondensable gases are recollected in the upper part of the external shell and moved by an specific outlet pipe ( Num. 25; Fig. 9, 10 and 11;1 Pp. 8/16, 9/16 and 10/16) which crosses the external calandria shell and go to the exterior where a control valve allows them to escape to the atmosphere or sends them to a general condenser, depending on the work pressure. The separator supports have a "T" shape with equal branches (Num. 21, Fig. 9, 10 and 11, Pp. 8/16, 9/16 and 10/16) the "T" axis has some circular perforations, which allow a free steam circulation, and it is welded by its bottom and by its large to the bottom of the calandria, (num. 23; Fig 10 and 11; Pp. 9/16 and 10/16), the area formed by the "T" arms (Num. 21a, Fig. 11, Pp. 10/16) functions as support to the heating surface or calandria's cover. The heating surface (Num. 20, Fig 9, 10 and 11; Pp. 8/16, 9/16 and 10/16) is the calandria cover, as we can see in Fig. 10 (Pp. 9/16) is a piece that start s from a wide flat edge where the interior shell of the calandria is assembled (Num. 19a; Figs. 11; Pp. 10/16) and with the support guide of the central tube (Num. 16, 16a, Fig. 10 and 11; Pp. 9/16 and 10/16) and continues in an truncated cone shape that ends in the wide flat edge where the external shell of the calandria is assembled (Num. 24 and 24a; Fig. 10 and 11 Pp. 9/16 and 10/16) and with the vessel section of the basic evaporator center - periphery ( Num. 40 c; Fig. 15; Pp. 12/16), we can see the build up diagram in Fig. 7 and 8 ( Pp. 6/16 and 7/16) , also we can see from a plant view Fig. 9 that the open descendent channel has a circular concentric spiral shape that goes from feeding liquor point in the center ( num. 27; Fig. 9 and 10; Pp. 8/16 and 9/16) to the periphery that ends with a vertical tube ( Num. 25; Fig 9 and 10; Pp. 8/16 and 9/16) , being the open descendent channel of rectangular type with circular bottom ( Fig. 1; Pp. 1/16) thus it is a circular spiral, circumstance that we can also see on Fig. 10 an 11 ( Pp. 9/16 and 10/16), the calandria cover or heating surface ( Num. 20; Fig 9,10 and 11; Pp. 8/16, 9/16 and 10/16 ) is sustained on its bottom over the separators supports ( Num. 21 and 21 a; Fig. 10 and 11; Pp. 9/16 and 10/16). As part of the calandria's assemble, of the basic evaporator center - periphery, we have the guide support for the central tube (Num. 16, Fig. 9.10, and 11; Pp. 8/16, 9/16 and 10/16), this support is assembled with the internal shell of the calandria (Num. 19 and 19a; Fig 10 and 11; Pp. 9/16 and 10/16) and with its cover (Num. 20; Fig 9, 10 and 11; Pp. 8/16, 9/16 and 10/16) hermetically, we also have the upper flanges which are equal "T" branches inverted over the conic part of the cover and fixed in the edges of the "T' axis by locks or screws to the supports, which are in one side in the bottom of the vessel of the evaporator center - periphery ( Num. 44 : Fig. 15: Pp. 12/16) and by the other side in the central tube support guide ( Num. 16; Figs 10 and 11 Pp. 9/16 and 10/16) . The upper flanges work to avoid deformations on the calandria's cover. The calandria center - periphery, is a close container where the feed steam which flows from its specific inlet (Num. 28; Figs. 10and 11; Pp. 9/16 and 10/16), is distributed along de calandria among the separate support holes (Num. 21; Fig. 10, and 11; Pp. 9/16, and 10/16), heats the bottom of the calandria's cover or heating surface (Num. 20; Fig. 9,10 and 11; Pp. 8/16, 9/16 and 10/16), on this procedure looses heat, which is condensed and converted to condensed water which is recollected in the periphery of the calandria and exits by the condensers outlet (Num. 22; Fig. 9, 10 and 11; Pp. 8/16, 9/16 and 10/16), meanwhile the uncondensed gases of the heated steam are also recollected and are removed by the uncondensed gases outlet (Num. 26; Fig. 9, 10 and 11; Pp. 8/16, 9/16 and 10/16) . By the upper part of the calandria's cover or heating surface, where the descendent channel starts (Num.27; Fig. 9 and 10; Pp. 8/16 and 9/16), it is fed in a tangential way to itself, the liquor or evaporating solution which flows following the descendent channel until gets to the point (Num. 25; Figs. 9 and 10, Pp. 8/16 and 9/16) where the channel ends in a vertical tube, therefore after crossing the bottom of the calandria (Num. 23, Fig. 10 and 11; Pp. 9/16 and 10/16) does an extensive elbow of 90° and then an arch with a lateral circle of approximately 90^{a} parallel to the vessel , descending and placed back by a reduction in the end of the bayonet to the point ( Num. 14; Fig 6 and 7; Pp. 5/16 and 6/16) where the next calandria's descendent channel starts, in a way that the flow of the feeding liquor is tangential to the bottom surface of the channel, passing the liquor from a basic evaporator to another. On its way over the evaporator's heating surface center - periphery, the liquor evaporates and produces steam which is recollected in the vessel of the basic evaporator center - periphery section (Num. 40; Fig 14 and 15; Pp. 12/16) and goes through the steam outlets (Num. 43 and 43a; Fig. 14 and 15; Pp. 12/16) to feed the calandria of the next basic evaporator. The vessel of the basic evaporator (Num. 40; Fig. 15; Pp. 12/16) placed to the calandria center - periphery is a straight tubular circular cylinder which has on its bottom a joining clamp to the calandria (Num. 40c; Fig. 15; Pp. 12/16) and on its upper part another clamp (Num. 40a. Fig. 14 and 15; Pp. 12/16) which can be placed to the upper cover of the modular evaporator or to the bottom of the basic evaporator calandria, that from up and down precedes it, on its lateral shell (Num. 40 b; Fig. 15; pp. 12/16), has one or two sight glasses (Num. 41; Fig. 14 and 15; Pp. 12/16) to observe the equipment interior and in some cases depending on the equipment size has also an operator's entrance (Num. 42; Fig. 15, Pp. 12/16); In the internal edge of the bottom clamp (Num. 40c; Fig. 15 Pp. 12/16) has the supports ( Num. 17; Fig. 10 and 11; Pp. 9/16 and 10/16) for the calandria center - periphery upper flanges . It also has in the upper part of the lateral shell the steam produced outlets (Num. 43 and 43 a Fig. 14 and 15; Pp. 12/1) that can be from two or more, generally four, this items are connected by joints (num. 43b; Fig. 15; Pp. 12/16) to a downward vertical pipes until the next calandria steam inlet height is located (Num. 8; Fig. 6, 7 and 8; Pp. 5/16, 6/16 and 7/16) and by an 90° elbow and a nipple are connected to the inlet joints, sending the produced steam to the next basic evaporator or condenser; it is convenient to weld on the descendant 90° elbow branch a joint of a proper size to have and extra access to a steam supplementary feeding or to clean the calandria. The objective of the basic evaporator center - periphery vessel; (Num. 40, Fig. 14 and 15; Pp. 12/16) is to give a camera, where the produced steam momentarily is stored, before exiting through the steam outlets (Num. 43, Fig. 14 and 15 Pp. 12/16) to the next module.

Theoretically, the number of basic evaporators that can be assemble to form a modular evaporator will depend on the temperature gradient between the steam fed on the calandria and the liquor temperature, or evaporating solution fed and on the work pressure in the interior of the evaporator. For its design, the evaporator with heating surface formed by an open descendant channel in a spiral concentric shape, might be build by one main evaporator, this number will depend on cost - feature considerations, in the process material, upon technical consideration upon the results, of the available area or design. Because of evaporation, the volume of the liquor or evaporating solution decreases; in occasions it is convenient to decrease the channel wide from a basic unit to another, in such way that the one positioned on top has a wider channel from the one beneath to maintain the liquor height in the middle of the open channel and therefore, maintain a good relation between the heating surface and the evaporating solution. Notice that in the figures related with the heating surfaces, (Fig. 6 and 9; Pp. 5/16 and 8/16) the liquor flow is consider from left to right, that is the reason why the spirals formed with the open channel are in this direction, however if preferred, the flow to run from right to left, the open channel spirals can be in this way without any problem on the performance or equipment design. Regarding the type of channel used in the heating surface, we have three principal types: open channel of rectangular section and circular bottom, shown in Figs. 1 and 1b, (Pp. 1/16) upon the transversal cut diagram of this channel we can see that it is formed by three parts: the circular bottom (Num. 5, Fig. 1 and 1b, Pp. 1/16) and the two vertical lateral shells (Num. 4 and 6, Fig. 1 and 1b, Pp. 1/16), with the mentioned characteristics described for Fig. 1 (Pp. 5); this channel type is preferentially used when it has a circular concentric descendent spiral, as shown in the modular evaporator transversal cuts Fig. 16 ( Pp. 13/ 16) and 17 ( Pp. 14/16). The second open channel type is the rectangular section and flat bottom shown in Fig. 2 and 2b, (Pp. 2/16) where we can notice that this channel is build by three parts: flat bottom (Num. 10, Fig. 2 and 2b, Pp. 2/16) and the two vertical lateral shells (Num. 9 and 11, Fig. 2 and 2b, Pp. 2/16), with the mentioned characteristics described for Fig. 2 (Pp. 5) this channel type is preferentially used when it has a rectangular concentric descendent spiral, as shown in the modular evaporator transversal cuts Fig. 18 ( Pp. 15/ 16) and 19 ( Pp. 16/16).

The third channel type is shown in Fig. 3 and 3b (Pp. 3/16) where we can notice that this channel is build by three parts: conic bottom formed upon the intersection of two straight bowed sections (Num. 16 and 19, Fig. 3, Pp. 1/16) and the two vertical lateral shells (Num. 15 and 17, Fig. 3, Pp. 1/16), with the mentioned characteristics described for Fig. 3 (Pp. 6).

Considering the relative top - down location of each module in the equipment, the principal location sequences are four. The first sequence (Fig. 15; Pp. 13/16 and Fig. 18, Pp. 15/16) is when the equipment starts with a basic evaporator with a concentric descendent spiral periphery - center channel as heating surface, (Num. 56 and 57; Fig. 16; Pp13/16 or Num. 76 and 77; Fig 18; Pp. 15/. 16) followed by a basic evaporator with a concentric descendent spiral center - periphery channel as heating surface, (Num. 58 and 59; Fig. 16; Pp13/16 or Num. 76 and 77; Fig 18; Pp. 15/. 16) and subsequently, finishing the equipment with a concentric descendent spiral periphery - center channel as heating surface in the last module, as shown on Fig. 16 and 18 ( Pp. 13/16 and 15/16) . The modular evaporators shown on fig. 16 and 18 (Pp. 13/16 and 15/16) have the same sequence, the difference is that fig. 16 (Pp. 13/16) corresponds to a modular evaporator build from basic evaporators with a circular descendent spiral and with an open rectangular type channel of circular bottom, thus this equipment externally will have a straight circular cylinder shape with a smaller circular base than its height, the figure 18 (Pp. 15/16) shows a modular evaporator build from basic evaporators with a rectangular descendent spiral and with an open rectangular type channel of flat bottom, thus this equipment externally will have a straight rectangular parallelepiped shape with a smaller rectangular or squared base than its height. The second sequence, (Fig. 17 and 19; Pp. 14/16 and 16/16), is when the equipment starts with a basic evaporator with a concentric descendent spiral center - periphery channel as heating surface, (Num. 66 and 67; Fig. 17; Pp14/16 or Num. 86 and 87; Fig 19; Pp. 16/. 16) followed by a basic evaporator with a concentric descendent spiral periphery - center channel, (Num. 68 and 69; Fig. 17; Pp14/16 or Num. 88 and 89; Fig 19; Pp. 16/. 16) and subsequently, finishing the equipment with a concentric descendent spiral periphery - center channel in the last module, ( Num. 68 and 69; Fig. 17 Pp. 14/16 or Num. 88 and 89; Fig. 19; Pp. 16/16)) . The modular evaporators shown on fig. 17 and 19 (Pp. 14/16 and 16/16) have the same sequence, the difference is that fig. 17 (Pp. 14/16) corresponds to a modular evaporator build from basic evaporators with a circular descendent spiral and with an open rectangular type channel of circular bottom, thus this equipment externally will have a straight circular cylinder shape with a smaller circular base than its height. The figure 19 (Pp. 16/16) corresponds to a modular evaporator build from basic evaporators with a rectangular concentric descendent spiral and with an open rectangular type channel of flat bottom, thus this equipment externally will have a straight rectangular parallelepiped shape with a greater height than base. The third sequence is when the modular evaporator starts with a basic evaporator with a concentric descendent periphery - center spiral channel as heating surface, followed by a basic evaporator with a concentric descendent center - periphery spiral channel, and subsequently, finishing the last module with a concentric descendent center - periphery spiral channel. The fourth sequence is when the modular evaporator starts with a basic evaporator with a concentric descendent center - periphery spiral channel as heating surface, followed by a basic evaporator with a concentric descendent periphery - center spiral channel, and subsequently, finishing the last module with a concentric descendent center - periphery spiral channel.

OPEN CONCENTRIC DESCENDENT SPIRAL SHAPE CHANNEL HEATING SURFACE EVAPORATOR, OPERATION AND APPLICATIONS The evaporator with heating surface formed by an open concentric descendent spiral shape channel is aa modular evaporator for general use ( Figs. 16, 17, 18 and 19; Pp. 13/16, 14/16, 15/16 and 16/16 ), being its main applications the next four: (a) It can be used to increase the concentration of one solution or suspention by evaporation of part of disolvent or diluyent liquid ; Referencing as example to the modular evaporator showed on figure 16 ( Pp. 13/16) , the equipment works in this way: the modular evaporator is fed with the solution in proccess, it is a liquid that contains some quantity of non volatiles substances dissolved, this is done in the feeding inlet ( N°. 60, Fig. 16, Pp. 13/16) of the first basic evaporator module placed in the top of the equipment, where it begins the descendent channel ( N°. 14; Fig. 6; Pag. 5/16) that is the calandria heating surface ( N°. 57, Fig. 16, Pp. 13/16) and the caloric energy needed for the proccess is fed in the steam inlet of the first calandria ( N°. 61, Fig. 16, Pp. 13/16) it is usually pressured water steam or some enough hot fluid; due the heating some quantity of the liquid in proccess is converted on steam and this produced steam is fed to the calandria of the next basic evaporator module ( N°. 59; Fig. 16; Pp. 13/16) in their steam inlets ( Num. 28, Fig. 9. Pp. 8/16), where is used to heat this calandria and is converted in condensated water, this condensated water goes to the corresponding condensates outlet at the second basic evaporator module ( N°. 64, Fig. 16, Pp. 13/16, or N°. 22, Fig. 9, Pp. 8/16). in the meantime the rest of solution continuos flowing downwards in shape of a thin film and reaches the point where ( N°. 13; Fig. 6; Pp. 5/16) the calandria heating surface open descendent channel of the first basic evaporator module ends ((N°. 57; Fig. 16; Pp. 13/16) passing throug the concentrated solution outlet to the second module where is fed to the descendent open channel ( N°. 27, Fig. 9. Pp. 8/16) that is the heating surface of this second module calandria; this calandria was heated by the steam produced in the first basic evaporator module and again part of the liquid in proccess is converted in steam and is used to feed the third basic evaporator module calandria ( N°. 57; Fig. 16; Pag. 13/16) by its steam inlets ( N°. 8; Fig. 6; Pag. 5/16) , the produced steam introduced , heats this calandria and is converted in condensated water, this condensated water goes out of the equipment by the third basic evaporator condensates ( N° 64; Fig. 16; Pp. 13/16)outlet ( N°. 12: Fig. 6; Pp. 5/16) , in the meantime the rest of solution over the heating surface continues flowing down in shape of a thin film and reaches the point where the second basic evaporator calandria ( N°. 59; Fig. 16; Pp. 13/16 ) open descendent channel of the heating surface ends (N°. 25; Fig. 9; Pp. 8/16) and continuos downwards to the concentrated solution outlet of the third module, where is fed in the descendent open channel ( N°. 14, Fig. 6; Pag. 5/16) that is the heating surface of this calandria , and repeating the heating- evaporation cycle again and again as many basic evaporator modules exists on the modular evaporator, the final result is that the volume of concentrate solution that goes out in the last basic evaporator module concentrated solution outlet ( N°. 62. Fig. 16; Pag. 13/16) located in the bottom of the equipment is lower than the volume fed in the first module feeding inlet (N°. 60; Fig. 16; Pp. 13/16), but considering that the amount of non volatil substances dissolved in the final concentrated solution is the same of which was fed in the first module, being the final concentration bigger, due is the result of dividing the quantity of non volatil substances between the concentrated solution final volume; we can increase the concentration of one solution until its saturation point by means of the modular evaporator, it is possible to use this equipment to increase the solids in the concentration of fruit juice, or plants juice, or saline solutions; (b) other application of this modular evaporator is for purification process, one liquid for evaporation and posterior condensation; this case is when the modular evaporator is fed with a solution formed by one liquid that contains a certain kind of impurities , an amount of non volatil substances with the objetive to obtain the diluent liquid free of impurities, the equipment operation system is the same as was described abobe (a) ; the only operation difference is that the produced free condensates of non volatil substances are separated as principal product, assuming that the outside concentrate soluton of the last module is a subproduct or residual product ; for example the equipment can be used to obtain low salt condensated water from a saline solution. (c) Other application of this modular evaporator is to chill a liquid or hot solution, in this case it will work as an adiabatic condenser evaporator , the equipment will operate in the following way: the modular evaporator is fed with hot solution from the proccess, this is done in the first basic evaporator module feeding inlet ( N°. 60, Fig. 16, Pp. 13/16) placed in the top of the equipment, where it begins the descendent open channel ( N°. 14; Fig. 6; Pag. 5/16), calandria heating surface ( N°. 57, Fig. 16, Pp. 13/16) and without the need of any caloric energy of the proccess in the first calandria steam inlet ( N°. 61, Fig. 16, Pp. 13/16); due to its own heating, some quantity of the liquid in proccess is converted to steam and this produced steam is fed to the next basic evaporator module calandria ( N°. 59; Fig. 16; Pp. 13/16) through the steam inlets ( Num. 28, Fig. 9. Pp. 8/16), where is used to heati this calandria and it is converted in condensated water and then goes out through the correspondind condensers outlet of this second basic evaporator module ( N°. 64, Fig. 16, Pp. 13/16). In the meantime, the rest of solution, over the heating surface, continue flowing downwards in a thin film and reaches the point where the first basic evaporator module calandria heating surface channel ends ( N°. 13; Fig. 6; Pp. 5/16) ((N°. 57; Fig. 16; Pp. 13/16) passing through the second module concentrated solution outlet where is fed into the open channel ( N°. 27, Fig. 9. Pp. 8/16) that is the heating surface of this second module calandria (N°. 59; Fig. 16; Pp. 13/16), this calandria was heated by the steam produced in the first basic evaporator module and again part of the liquid in proccess is converted in steam and it is used to feed the third basic evaporator module calandria ( N°. 57; Fig. 16; Pag. 13/16) by its steam inlets ( N°. 8; Fig. 6; Pag. 5/16) , the feeding steam heats this calandria and is converted to condensated water that leaves the equipment by the condensates outlet ( N°. 12: Fig. 6; Pp. 5/16) of this third basic evaporator ( N° 64; Fig. 16; Pp. 13/16) in the meantime the rest of the solution over the heating surface continues flowing downwards in a thin film and reaches the point where the second basic evaporator calandria open channel, heating surface, ends (N°. 25; Fig. 9; Pp. 8/16) ( N°. 59; Fig. 16; Pp. 13/16 ) and continue downwards by the concentrated solution outlet to the third module, where is fed into the open channel ( N°. 14, Fig. 6; Pag. 5/16) that formed the calandria heating surface of this module, repeating the heating- evaporation cycle again and again as many basic evaporator modules exists in the modular evaporator, as on each evaporation - condensation cycle the temperature of the feeding solution and of the produced condensates decreases, the overall result is that the temperature of both , condensates and solution that leave the last module are lower than the temperature of the solution fed in the first module, thus this modular evaporator can be used by example: for cooling the hot water produced in a proccess, for reuse or to discharge at low temperature in the efluents . (d) Other use is in the process of one sobresaturated crystals suspention in mother liquor to increase the crystals size until we met the required process size as one continuous crystalizer evaporator, in this case it is necessary to feed in simultaneous mode the sobresaturated suspention of its liquid mother in the modular evaporator liquid inlet (N° 60; Fig. 16; Pp. 13/16) and one saturated solution of the same substance that forms the crystals into the calandria heating surface open channel (N°.13; Fig. 6; Pp. 5/16) ( N°. 57; Fig. 16; Pp. 13/16) of the first basic evaporator module, for this reason , it is neccesary to arrange a feed supplementary inlet for this concentrated solution even in the first module as the following modules and supplementary inlets of steam on each calandria ( N°. 57, Fig. 16; Pp. 13716). of the basic evaporators perphery - center, in the 90° elbows that are in the bottom of the steam inlet coupling tube (N°. 8; Fig. 6; Pag. 5/16), in such manner this supplementaries steam inlets as the supplementaries concentrated solution inlets are controlled by manual or automatized valves in order to maintain the sobresaturation level requested in all the proccess to obtain a continous increase on the crystals size, for example: the modular evaporator can be use to increase the sucrose crystal size in the sugar industry.

MODULAR EVAPORATOR CAPACITY. The modular evaporator dimensions depend on its working capacity design, considering that the design working capacity or normal capacity is when the first basic evaporator open channel inlet is half heigth full with the liquor or evaporating solution, the modular evaporator capacity depends on the open channel descendent dimensions that can have a width from 0.01 M. to 0.500 M., also depends of the hydraulic gradient or channel inclination requested aforesaid in Meter per Meter and it will be from 0.01 M per M. until 0.60 M. per M.

The capacity also depends on some factors: the spiral shape that can be circular concentric or rectangular concentric, the interfase area, heating surface requested, specific characteristics of the liquid or evaporating solution ; depends on steam or fluid used in the heating, quality and quantity and the requested proccess factors, it is possible the construction of modulars evaporators with working capacities from 0.010 tons/ Hr. to 1000 Tons./Hr or greater.

CONSTRUCTION MATERIAL The evaporator construction material depend on: the nature of the liquid or solution in the evaporation proccess; the steam pressure or fluid used for heating; the mechanical resistence requested; the working temperature, etc. it can be: steel, carbon steel; stainless steel ; glassed steel; iron, copper, brass, aluminun, ceramic material, pyrex glass, plastic, sintetic ressin, etc.

INTERFASE AREA The liquid - gas interfase area is the liquid surface that is in contact with the atmospheric air and its size is determined on each calandria multiplying the length of the open channel by its width, and adding all the basic evaporators calandria's interfase areas we will obtain the total modular evaporator interfase area.

HEATING SURFACE AREA The heating surface area of each basic evaporator calandria depend on the open channel descendent length multiplied by the hydraulic ratio or wetted perimeter, according to the number of spirals on each stage which depend on the width of the open descendent channel, of the diameter or equipment dimensions and on the diameter of the central tube or central ducto dimensions. The total area of the modular evaporator heating surface is equal to the sume of all the basic evaporators calandria heating surfaces that are involved.

EVAPORATOR CONSTRUCTION As mentioned before the dimensions and the general arrangement of the evaporator are variable, upon some factors as : the capacity design , the quantity, nature and main features of solution or liquid on the process, pressure and quality of the fluid used in the heating and with another factors of the proccess involved ; therefore, first is neccesary to perform a study for each case and according with the results obtained , make up the design and detailed engeeniering plans and then to proceed to the evaporator building; usually it is a metallic construction , made in a well furnished mechanical cauldron workshop in order to do the cutting, folding, rouleau and welded of the carbon steel materials and hydraulic tubing connecctions; usually the calandria cover or heating surface is manufactured by one specialized company in stamping, rejection or metallic dieting. In the following evaporator construction description , that is giving only as am example, the construction criteria, dates and dimensions mentioned, corresponds to one modular evaporator design to process 300 Tons./Hr. of clarified juice of sugar cane of 16° Bx., with 98° C. temperature in order to produce 77 Tons./ Hr. of one concentrate solution of 62° Bx. and 58°C. temperature; feeding 25.5 Tons/Hr. of saturated steam at 1.5106 Kg./Sq. Cm. pressure and temperature of 112° C. at the calandria of the first basic evaporator and exausting to the general condenser by the steam outlet of the last module or basic evaporator 27 Ton./Hr. of steam produced at 0.1850 Kg./Sq. cm. pressure and 58° C. temperature.

Evaporator diameter: 6 M. (236"); Central tube diameter 0.61 M. (24"); Evaporator total height: 26.5 m. ( 1043 "); hydraulic Gradient 0.015 M. x M. ; Number of basic units: 9; First module or basic evaporator: channel length 125 M.; evaporation area: 30 Sq. M.; Open channel width: 0.254 M. (10"); Considering as building material for the body sections and calandrias : carbon steel plate, with exception of the heating surfaces which are made in stamping stainless steel plate with rectangular section and circular bottom open channel type ( Fig. 1 and 1B, Pp. 1/16); with liquid flow from left to right , descending in a concentric circle spiral way, with an arrangement of the modules or basic evaporators according to the first sequence ( Fig. 16, Pp. 13/16) of the vaccum multiple effects. For the shape and dimensions of the evaporator and its constitutuion this equipment is self supported and it is mounted over one ad hoc structural base building with the enough mechanical resistence and available space under the bottom of the last module for the convenient free access in order to do operations, troubleshooting and mantinence jobs in the bottom of the last module calandria and in the outside tubes of concentrated solution and the produced steam to the general condenser.

As shown in the figure 16 ( Pp. 13/16) the building of the evaporator begins, from the bottom to the top, with one basic evaporator from the periphery to center then on the top of its cylindrical vessel is coupled one basic evaporator from the center - periphery and in the top of its cylindrical vessel is coupled another basic evaporator from periphery - center and subsequently until reach nine modules , and over the cylindrical vessel of the last module is coupled the evaporator cover ( N°. 55, Fig 16, Pp. 13/16). Every modules or basic evaporators needed is buildt with four independients parts which are: the calandria bottom, the calandria cover, the central tube and the circular body ; then they are mounted according the selected sequence, for example, it is neccesary to build five basic evaporators periphery - center ( Figs. 6, 7 and 8. Pp. 5/16, 6/16, 7/16 and Figs. 12 and 13 , Pp. 11/16) and also to build four basic evaporators model from center -periphery ( Figs. 9,10, 11. Pp. 8/16, 9/16, 10/16 and Figs. 14 and 15, Pp. 12/16) , according with the first sequence ( Fig. 16, Pp. 13/16) we begin the evaporator's build up from the bottom to up, mounting over the estructural base the calandria of one basic evaporator periphery - center type and follow the first sequence mentioned in (fig. 16, Pp. 13/16).

BASIC EVAPORATOR CALANDRIA PERIPHERY CENTER BUIL UP ( Fig. 6,7 and 8. Pp. 5/16, 6/16 and 7/16).-As shown in the view plant ( Fig. 6, Pp. 5/16), in the transversal view (Fig.7. Pp. 6/16) and in the assembly view ( Fig. 8, Pp. 7/16), the basic evaporator calandria periphery -center is formed by the external shell ( N° 7, Pp. 5/16, 6/16 and 7/16), the lower cover or calandria bottom ( N° 10, Pp. 5/16, 6/16 and 7/16), the internal shell (N° 9, Pp. 5/16, 6/16, and 7/16), the separators support (N° 6, Pp. 5/16, 6/16 and 7/16), the heating surface or calandria upper cover (N°. 5 , Pp. 5/16, 6/16 and 7/16), the uppers store ( N°. 4 , Pp. 5/16, 6/16 and 7/16), the central tube support (N°. 3, Pp. 5/16, 6/16 and 7/16) and the central tube ( N°. 1, Pp. 5/16, 6/16 and 7/16); the calandria has the conneccions for the steam inlets ( N°. 8, Pp. 5/16, 6/16 and 7/16), condensers drainage (N°.12, Pp. 5/16, 6/16 and 7/16), uncondensable gases withdrawals (N°. 11, Pp. 5/16, 6/16 and 7/16), produced steam outlet (N°. 15, Pp. 5/16, 6/16 and 7/16), feeding solution inlet or diluted solution inlet (N°. 14, Pp. 5/16, 6/16 and 7/16), and concentrated solution outlet (N°. 13, Pp. 5/16, 6/16 and 7/16).

CALANDRIA EXTERNAL SHELL The calandria external shell , labeled with the number 7 in the figures 6, 7 and 8 (Pp. 5/16, 6/16 and 7/16), is formed by three parts , these are 7a, 7b, and 7c (Fig.8, Pp. 7/16). The part 7a is a vertical cylinder with an internal diameter equal to the vessel internal diameter and its height depends on the steam inlet diameter tube, (N°.8, Figs. 6, 7 and 8, Pp.. 5/16, 6/16 and 7/16), for example: in this case we need steam inlet tubes of 8" ( 20.32 cm.) , so the 7a height part could be as minimum 24" ( 60.96 cm.), the thickness of the steel plate depend on the work conditions, mainly to the pressure of steam used in the heating , for example: if we assume the use for the heating exhaust steam with a pressure of 1.0 Kg./Sq. cm. to 2.5 Kg./Sq. cm. (15 to 35 psig.) the thickness of carbon steel plate must have 1.27 cm. (1/2 ") thickness minimum. Moreover depending of the evaporator total height and the relative position of this basic evaporator in the equipment, we have to consider to increase the mentioned thickness in order to have the enough mechanical resistence. On its lower part , this cylinder ( 7a) is welded and properly squared at the medium part of one horizontal flat flange with 25.40 cm. (10" ) width minimum and 1.94 cm. (3/4 ") thickness, labeled with 7c (Fig. 8, Pp. 7/16) , the medium diameter of this flange is equal to medium diameter of evaporator vessel, for this reason it has one external border approach of 4 3/4 " of width minimum and one internal border approach of 4 3/4" of width minimum, on the medium part of the external border has 24 round holes with symetrical distribution, those holes are used to pass trough the external adjust bolts between the calandria and the vassel evaporator from center - periphery section (N° 40c.Fig. 15. Pag 12/16.) there is a gasket of appropiate material between these parts. The internal border of 7c part (Fig 8. Pp. 7/16) is flat in order to weld here properly the calandria bottom ( N°. 10. Fig. 8. Pp. 7/16). From its upper side the cylinder labeled 7a (Fig.8. Pp. 7/16) is welded and properly squared with an horizontal flat flange of 24.5 cm (10") width minimum and 1.9 cm. (3/4 ") thickness, labeled as 7b (Fig. 8. Pp. 7/16) , the medium diameter of this flange is equal to the evaporator vessel medium diameter, in this way there is one external border and one internal border both with a width of 4 3/4 " approximately . At the medium part of the external border has drilled minimum 24 round holes in symetrical distributions, these holes are used to pass through the adjust bolts with the external part of the heating surface (N° 5, Figs. 6, 7 and 8. Pp. 5/16, 6/16 and 7/16) and the evaporator basic vessel section periphery - center ( N°. 30c. Fig 13. Pp. 11/16). On the medium part of internal border, symetrically distributed, has welded or screwed minimum 24 cord bolts, with an enough length for make up the coupling between the internal part of the heating surface ( N° 5. Figs. 6, 7 and 8. Pp. 5/16, 6/16 and 7/16) and the evaporator from periphery - center vessel section ( N°. 30c. Fig. 13, Pp. 11/16) using nuts. In these couplings has material gasket ( N°. 2e and 2d. Fig. 8 Pp. 7/16) in order to make up hermetical junctions.

CALANDRIA LOWER COVER. The calandria lower cover, labeled as number 10 (Figs. 7 and 8. Pp. 6/16 and 7/16) , in this example, is build in carbon steel plate of 1.27 cm ( 1/2 " ) minimum thickness, cutted and welded on the requested sizes, has a truncated inverted cone shape, with an horizontal flat edge of a minimum width of 4 1/2 " on all the length of the mayor base circumference, the diameter in the truncated inverted cone mayor base is about 9 1/4 " less than the diameter of evaporator vessel . The slope of the cone shell is equal to the slope of the heating surface (N°. 5. Figs.6,7 and 8. Pp. 5/16, 6/16 and 7/16) and it is determinated by the requested hydraulic gradient. The truncated inverted cone shell of the calandria lower cover (N°. 10. Figs. 7 y 8. Pp. 6/16 and 7/16) ends in a circumference that corresponds to the truncated inverted cone minor base, this diameter is equal to the internal diameter of the part labeled as 9a (Fig. 8. Pp. 7/16) which is part of the calandria internal shell, the calandria lower cover is welded and properly squared to this part.

INTERNAL SHELL The calandria internal shell, labeled number 9 (Figs. 7 and 8. Pp. 6/16 and 7/16), is formed by four parts which are: 9a, 9b, 9c and 9d (Fig. 8. Pp. 7/16); build on carbon steel plate with 1/2 " thickness as minimum , cutted and welded according the requested sizes. The part 9a is a metalic vertical cylinder with a t least a diameter of 6" bigger than the diameter of part labeled as 9c (Fig. 8.Pp. 7/16) , the height of this parts depend on the diameter of the welded couples (N°. 12. Fig.8 Pag.7/16) used in the tubes of condensates drainage, this size depends on the amount of produced condensates in the calandria; for example : if the couples are 6" diameter, the minimum height could be twice or 12" , the number of couples depend also in the amount of condensates, minimum two placed in diametrical opposite position , the tubes of condensates drainage pass through the evaporator center - periphery vessel section shell (Fig. 14 and 15. Pag. 12/16) and then go to the storage condensates tank . The part 9a (Fig. 8 Pp. 7/16) is crossed by the tubing of the uncondensable withdrawal (N° 11. Figs. 6, 7 and 8. Pags 5/16, 6/16 and 7/16), these tubing are of 1/2 " diameter and also traspasses the evaporator center - periphery vessel section shell (N°. 40b. Figs. 14 and 15. Pp. 12/16) and then they are discharged to atmosphere or send to the general condenser. The part 9a (Fig 8. Pp. 7/16) is welded and properely squared on its upper part to the calandria's bottom cover edge (N^{a} 10. Fig. 8. Pp. 7/16) and on its bottom is welded and properly squared to the external edge of the part labeled as 9b (Fig. 8. Pp. 7/16) this is one horizontal flat flange of carbon steel plane of 1/2 " thickness, with a minimum width of 6" , this part 9b is welded and properly squared with the part 9c (Fig. 8. Pp. 7/16) that is a vertical cylinder with an internal diameter 1/8" greater than the external diameter of the central tube (N°. 1. Figs. 6, 7 and 8. Pp. 5/16, 6/16 and 7/16), in this example the 9c internal diameter is 24 1/4" and its height is fixed by the requested hydraulic gradient of the heating surface , in this example it has a minimum height of 1.0 M.; the vertical cylinder 9c (Fig.8. Pp. 7/16) is welded and properly squared on its upper part to piece 9d (Fig. 8. Pp. 7/16) which is an horizontal flat flange de 1/2 " thickness , 5" width, and with an internal diameter equal to the diameter of the part 9c (Fig. 8. Pp. 7/16) which is welded and properly squared. In the medium diameter of the border formed by this flange , in the upper side, has welded or screwed in a symetrically distribution some bolts cord or birlos, 24 minimum, with a length enough to couple with the heating surface (N°. 5. Figs. 6, 7 and 8. Pp. 5/16, 6/16 and 7/16), and the central tube support ( N°. 3. Figs. 7 and 8. Pp. 6/16 and 7/16) using nuts. In all the couplings there are a gasket of special material (2c and 2b. Fig. 8 Pp. 7/16) in order to do hermeticals junctions. In the inferior side , this border has welded the supports of the uncondensables gases collecting tubing labeled as 11(Fig. 8. Pp. 7/16) it is a tubing of 1/2 " nominal diameter in a ring shape with holes, this ring has a diameter 3" greater than the medium diameter of part 9c and is connected with the withdrawal of uncondensables tubing, minimum two, in a diametrical opposite distribution.

SEPARATORS SUPPORTS The separators supports labeled with number 6 ( Fig. 6, 7 and 8. Pp. 5/16, 6/16 and 7/16) are made of carbon steel plate of 1/2 " thickness, these are T shape pieces, they are formed by the parts 6a and 6b (Fig. 8. Pp. 7/16). The part 6a (Fig. 8. Pp. 7/16) is a flat plate of 4" width minimum and a 1/2 "minimum thickness , with an adequate length so they may be welded in both extremes, for one side in all its width to the calandria external shell on the part 7a (Fig. 8. Pp. 7/16) and for the another side in all its width to the calandria internal shell on the part 9c (Fig. 8. Pp. 7/16) , in all its length to the middle of the bottom part is welded and properly squared with the part 6b (Fig. 8. Pp. 7/16), the piece 6b (Fig. 8.Pp. 7/16) is the axis of the T, is a vertical flat plate with 1/2 " thickness an its height is fixed by the heating surface hydraulic gradient and by the height of the piece 7a (Fig. 8. Pp. 7/16), it has some holes in the vertical side in a number to allow the free steam circulation , it is also welded and properly squared in all its length to the inferior side of the calandria bottom cone shell (N° 10. Fig.8. Pp. 7/16), in one of its edges is welded at the external shell in all its width to the part 7a (Fig. 8. Pp. 7/16) and in the other edge is welded to the internal shell in all its width to the part 9c (Fig. 8. Pp. 7/16). the upper part of the separator support , piece 6a (Fig. 8. Pp. 7/16) is a flat surface that supports the heating surface , the minimum number of separator supports in this example are 6 in symetrical distribution to 60° distance between each one.

HEATING SURFACE The heating surface (N°. 5. Figs. 6,7 and 8. Pp. 5/16, 6/16 and 7/16), is also the calandria upper cover, it is build in one piece, is a metallic plate its thickness is determinated by the steam pressure or fluid pressure used in the heating , depending of the evaporator diameter, the heating surface can be build in one piece of stamping metallic plate with a channel shape or can be build with some plate stamping metallic pieces welded between each other to obtain, a one piece that meets the requested shape and dimensions; in this case we will consider one stainless steel plate with a thickness of 4.763 mm (3/16" o 0.1875 ") stamped with the shape of one open channel with a circular bottom, descending from periphery - center , this channel finishes in the specially designed tube (N° 13. Figs. 6 and 7. Pags. 5/16 and 6/16) which guide the liquid in a tangencial approach over the heating surface of the next calandria. The heating surface has a shape of one truncated inverted cone with an horizontal flat border in along its circumference on its mayor base, the 5 external diameter of this flat border is equal to the external diameter of piece 7b (Fig. 8. Pp. 7/16) the border width is 1/2" bigger than the width of the piece 7b (fig.8. Pp. 7/16) and therefore : the diameter of the cone mayor base the is equal to the internal diameter of the piece 7b (Fig. 8. Pp. 7/16) less 1" , this border has on its external part the round holes for the adjusting bolds in. the same way to the piece 7b ( Fig. 8. Pp. 7/16) and in the internal part the round holes to assemble the cords and bolds, the slope of the cone part is fixed by the requested hydraulic gradient., this cone part ends in an horizontal flat border with a diameter 1" more bigger than the external diameter of the piece 9c (Fig. 8.Pp. 7/16) , the width of this border is equal to the width of the mentioned piece 9c (Fig.8. Pp. 7/16) plus 1/2 ", the smaller diameter of this edge is equal to the internal diameter of the piece 9c (Fig. 8. Pp. 7/16) , this edge has some round holes in order to permit the traspassing of cords bolts installed in the piece 9d (Fig. 8. Pp. 7/16).

UPPER FLANGES The upper flanges are pieces manufactured in carbon steel plate of 1/2" thickness on the shape of inverse T made up by two parts, one labeled as 4a (Fig.8.Pag.7/16) is the axis of the inverse T, it has a minimum width of 4" and the neccesary length to reach in one extreme the shell of evaporator periphery to center vessel section (Part 30b .Figs. 12 and 13 . Pp. 11/16), and in the another edge the shell of central tube support labeled as 3b (Fig. 8. Pp. 7/16), the part 4a (fig. 8. Pp. 7/16) is placed in vertical position between two verticals supports labeled as 4c (Fig.8. Pp. 7/16 or N°. 33 Fig.13. Pp. 11/16) and fixed in this place by one conic joint pin, in boths extremes the part 4a ( Fig. 8. Pp. 7/16) has the corresponding round holes. The piece 4b (Fig. 8. Pp. 7/16) that forms the arms of an inverted T has a minimum thickness of 1/2 " , a minimum width of 4" and a length equal to distance from the evaporator vessel periphery to center inferior border internal diameter (Num. 30c. Fig.13. Pp. 11/16) ( Fig. 12 and 13. Pp. 11/16) and the central tube support external diameter of the border 3A (Fig.8. Pp. 7/16). The piece 4b (Fig. 8. Pp. 7/16) is welded in its medium part in all its length with the inferior side of piece 4a (Fig. 8. Pag. 7/16); the upper flanges rest , by the inferior flat surface of piece 4b (Fig.8. Pp. 7/16), over the heating surface and there are in the example minimum 6 upper flanges symetrically distribuited.

CENTRAL TUBE SUPPORT GUIDE The central tube support guide is formed by three pieces , welded each other these are 3a, 3b and 3c (Fig. 8. Pp. 7/16), the piece 3a is an horizontal flat flange of minimum 1/2 " thickness , minimum width of 5" with an internal diameter equal to the internal diameter of the piece 9d (Fig. 8. Pp. 7/16), it has on its medium part corresponding round holes for traspassing the cords of bolts welded in the piece 9d (Fig. 8. Pp. 7/16). On the internal side in all its circunference length is welded and properly squared to the piece 3b (Fig. 8. Pp. 7/16). The piece 3b is a vertical cylinder with a thicness minimum of 1/2 " and with an appropiate height . This height must be equal to twice the height of the piece 7a, as minimum, (Fig. 8. Pp. 7/16) and an internal diameter equal to the piece 9c (Fig. 8. Pp. 7/16) it is welded and properly squared on its inferior side with the piece 3a ( Fig. 8. Pp. 7/16) and for its upper side with the piece 3c (Fig. 8. Pp. 7/16). The piece 3c (Fig. 8. Pp. 7/16) is an horizontal flat flange with an minimum thickness of 1/2 " , minimum width 5", and an internal diameter equal to the diameter of the piece 9c (Fig. 8. Pp. 7/16), it has on its meddle part holes symetricaly distribuited to traspass the coupling bolts of the central tube. In these unions there are gaskets (N°. 2, Figs. 7 and 8. Pags. 6/16 and 7/16) in order to do hermetical junctions.

CENTRAL TUBE The central tube (N° 1. Figs. 6,7 and 8. Pp.. 5/16, 6/16 and 7/16) is formed by two pieces these are: 1a and 1b (Fig. 8. Pp. 7/16). The piece 1a (Fig. 8. Pp. 7/16) is the central tube with a minimum thickness of 1/2 " and with a diameter fixed by the quantity of steam produced, in this example the diameter is 24", the height of this tube has to be the requested in order to permit that when assembled in the central tube support (Num. 3, Fig. 8. Pp. 7/16) it can rest in the bottom of the calandria inferior cover central part ( N°.23. Figs. 10 and 11. Pp. 9/16 and 10/16) of the basic evaporator from center to periphery (Figs 9, 10 and 11. Pp. 8/16, 9/16 and 10/16), this tube has on its inferior part, taking as center one distance of 4" from inferior edge, minimum 4 holes of 6" diameter minimum (N°. 1c . Fig. 8 . Pp. 7/16) symetrically distributed, in order to permit the inlet of the produced steam to the calandria of basic evaporator center to periphery (Fig. 9, 10 and 11. Pp.. 8/16, 9/16 and 10/16). The piece 1b (Fig. 8. Pp. 7/16) is an horizontal flat flange with a minimum thickness 1/2 ", minimum width 5" and an internal diameter equal to the external diameter of central tube, it is placed at a distance of 1 M. from the upper border of the central tube , is welded and properly squared in along its internal circumference with the central tube and has on its width medium part some rounds holes with an appropiated diameter, which correspond to the coupling bolts of the piece 3c. (Fig. 8. Pp. 7/16).

BASIC EVAPORATOR FROM CENTER TO PERIPHERY TYPE CALANDRIA BUILD UP As shown on n the figures 9, 10 11; Pp. 8/16, 9/16 and 10/16, the basic evaporator from center to periphery calandria is formed by de external shell (N°. 24. Figs. 9,10 and 11. Pp. 8/16, 9/16 and 10/16), the internal shell (N° 19, Figs. 9,10 and 11. Pp. 8/16, 9/16 and 10/16), the separators supports (N° 21. figs. 9, 10 and 11. Pp. 8/16, 9/16 and 10/16), the heating surface or calandria upper cover (N°.20. Figs. 9, 10 and 11. Pp. 8/16, 9/16 and 10/16), the uppers flanges (N°.17. figs. 10 and 11. Pp. 9/16 and 10/16), the upper support central tube guide (N°. 16.Figs. 9, 10 and 11.Pp. 8/16, 9/16 and 10/16), moreover the inlet steam conecctions (N°. 28.Figs. 9, 10 and 11. Pp. 8/16, 9/16 and 10/16), drainage of condensers (N°. 22. Figs. 9, 10 and 11. Pp. 8/16, 9/16 and 10/16), withdrawal of uncondensables (N°. 26. Figs. 9, 10 and 11. Pp. 8/16, 9/16 and 10/16), liquid feeding inlet or diluted solution inlet (N°. 27. Figs. 9, 10 and 11. Pp. 8/16, 9/16 and 10/16) and concentrate solution outlet (N°. 25. Figs. 9, 10 and 11. Pp. 8/16, 9/16 and 10/16).

CALANDRIA EXTERNAL SHELL The calandria external shell , labeled with number 24 figures 9, 10 and 11 (Pp. 8/16, 9/16 and 10/16), is build by three parts , which are: 24a, 24b and 24c. (Fig. 11. Pp. 10/16). the part 24b (Fig. 11. Pag. 10/16) is a vertical cylinder with internal diameter equal to the internal diameter of evaporator vessel and with a heigth that depends on the hydraulic gradient and of the height of piece 19b (Fig. 11. Pp. 10/16) in such way to allow the installation of tubing couples for the drainage of condensers , for example: if the tube nominal diameter is de 4", the 24b height could be minimum 12", the thickness of metallic plate will depend on working conditions, mainly of steam pressure used during the heating, for example, if we use to heat exahust steam with a pressure between 1.0 Kg./ Sq. cm. to 2.5 Kg. /Sq. cm. (15-35 psig) , considering carbon stell plate with a minimum thickness of 1/2 ". On its bottom , this cylinder is welded and properly squared on its middle part to one horizontal flat flange with a width minimum of 10" and thickness minimum of 3/4 " labeled as 24c (Fig. 11. Pp. 10/16), the medium diameter of this flange is equal to the medium diameter of evaporator vessel, in this way there are an external border with a width of 4 3/4 " an one internal border with a width of 4 3/4 ", in the medium part of the external border there are some round holes symetrically distribuited with an apropiate diameter in order to traspass the bolts coupling for the basic evaporator periphery to center vessel section (N°. 30a Fig. 12 and 13. Pag. 11/16). The internal border is flat in order to weld on this point, the calandria inferior cover (N°. 23. Fig. 11.Pp. 10/16). By the upper part the cylinder labeled 24b (Fig. 11. Pp. 10/16) is welded and properly squared to an horizontal flat flange with 10" minimum width and 3/4" minimum thickness, labeled as 24a (Fig.11.Pp. 10/16), the medium diameter of this flange is equal to the medium diameter of the evaporator vessel, therefore there are one external border with a width approach 4 3/4 " and one internal border with a width approach 4 3/4 ", in the middle part of external border symetrically distribuited it has minimum 24 round holes with a fit diameter for trespassing the coupling bolts of heating surface (N°. 20. Fig. 11. Pp. 10/16) and the evaporator from center to periphery vessel section (N°. 40c. Fig. 14 and 15. Pp. 12/16). In the internal border on the medium part of upper surface has symetrically distribuited welded or screwed some bolts cords with a suitable long for coupling the heating surface and the evaporator from center to periphery vessel section (N°. 40c. Figs. 14 and 15. Pp. 12/16) using nuts. In those couplings it has a gasket (N°. 18. Figs. 10 and 11. Pp. 9/16 and 10/16) made on suitable material in order to made them hermetical. By the inferior face of the internal border of flange 24a (Fig. 11.Pp. 10/16) rests the withdrawal of incondensables gas , it is a ring pipe of 1/2 " nominal diameter with some perforations and connected with the tube of uncondensable gas outlet , labeled as N°. 26 (Figs. 9, 10 and 11. Pp. 8/16, 9/16 and 10/16), this tube traspasses the external shell 24b (Figs. 9, 10 and 11. Pp. 8/16, 9/16 and 10/16) and is extended inside the evaporator and goes to the atmosphere or general condenser, the withdrawal of uncondensable gas ring pipe diameter is almost 3" lesser than the part 24b internal diameter (fig. 11. Pp. 10/16).

CALANDRIA LOWER COVER The calandria lower cover , labeled as 23 (Figs. 10 and 11. Pp. 9/16 and 10/16), is manufactured in carbon steel plate of 1/2 " minimum thickness , cutted and welded at the suitables dimensions, has a shape of one truncated cone with a horizontal flat border with a minimum width of 4 1/2 " along its mayor base circumference, the mayor base diameter of the truncated cone will be approximate 9 1/4 " smaller than the evaporator vessel diameter. the slope of the cone shell will be equal to heating surface N°. 20. Figs. 9, 10 and 11. Pp. 8/16, 9/16 and 10/16) and both are fixed by the requested hydraulic gradient. This cone shell ends at the corresponding small base circumference of the truncated cone, its diameter will be equal to the external diameter of the part labeled as 19c( Fig. 11. Pp. 10/16) that is part of the calandria internal shell on which is welded.

CALANDRIA INTERNAL SHELL The calandria internal shell, labeled with the N° 19 (Figs. 10 and 11. Pp. 9/16 and 10/16), is build by three parts which are 19a, 19b and 19c (Fig. 11. Pp. 10/16) manufactured in carbon steel plate of minimum thickness 1/2 " , cutted and welded according the requested sizes; the part 19b (Fig. 11. Pp. 10/16) is a metallic vertical cylinder with an internal diameter 1/8 " bigger than the external diameter of the central tube ( N°1. Figs. 6, 7 and 8. Pp. 5/16, 6/16 and 7/16) with a minimum height of 24", has on its lower part 6" diameter round holes (N°. 28. Fig. 11. Pp. 10/16), symetrically located , with the center at 4" height from the superior surface of cone smaller base formed by the calandria lower cover (N°. 23. Fig. 11.Pp. 10/16), those holes are must fit with the central tube holes (N° 1c. Fig. 8. Pag.7/16) for the calandria feeding steam. This part 19b (Fig. 11. Pp. 10/16) is welded and properly squared in its inferior part to the internal border of the part 19c (Fig. 11. Pp. 10/16) and on its upper part is welded and properly squared with the part 19a (Fig. 11. Pp. 10/16. The part 19c (Fig. 11. Pp. 10/16) is an horizontal flat flange with a minimum thickness of 1/2", width minimum 5" and one internal diameter equal to the 19b part internal diameter (Fig. 11. Pp. 10/16) the surface of this flange is flat and is welded with the calandria inferior cover along its internal and external circunferences. The part 19a (Fig. 11. Pp. 10/16) is an horizontal flat flange with a minimum thickness of 1/2 ", width minimum 5" and with an internal diameter equal to the part 19b internal diameter (Fig. 11. Pp. 10/16) . In the medium diameter of the border formed by this flange has symetrically distribuited welded or screwed bolts cords with a suitable long for coupling the heating surface and the tube central upper support guide using nuts, those couplings have suitables gasket to made them hermeticals. SEPARATORS SUPPORTS The separators supports , (N°. 21.

Fig. 11.Pp. 10/16) , are manufactured in carbon steel plate of minimum thickness 1/2 " , these are T shape pieces (N°. 21a and 21b. Fig. 11. Pp. 10/16), the piece 21a (Fig. 11. Pp. 10/16) is an horizontal plate with a minimum thickness of 1/2 " , a minimum width of 4" and with the suitable length to be weld in all its width at one extreme to the calandria internal shell in the piece 19b (fig. 11. Pp. 10/16) and by the another extreme to the calandria external shell in the piece 24b (Fig. 11. Pp. 10/16). Along its length in the middle part of its inferior face is welded and properly squared in the piece 21b (Fig. 11. Pp. 10/16) which is the T axis; the piece 21b (Fig. 11. Pp. 10/16) is a vertical plate with a minimum thickness of 1/2 ", its height depend of heating surface hydraulic gradient, in this example has a minimum value of 24" , has rounds holes on its vertical surface in a suitable number to allow the steam pass through and is also welded and properly squared by its inferior part along the bottom of the calandria conic shell ( N°.23. Fig. 11. Pp. 10/16), in one of its edges is welded in all its width with the piece 19b (Fig. 11. Pp. 10/16) of calandria internal shell and by the other extreme with the part 24b (Fig. 11. Pp. 10/16) of the calandria external shell ; the separator support upper part (21a. Fig.11; Pp. 10/16) is a flat surface which function is as a support for the heating surface (N°. 20. Fig. 11. Pp. 10/16), the minimum number of separators supports is 6 and are symetrically distributed.

HEATING SURFACE The heating surface or calandria upper cover (N°. 20. fig. 9,10 and 11. Pp. 8/16, 9/16 and 10/16) is build in one piece , is a metallic plate its thickness is fixed by the pressure steam or fluid used for the heating, in this case, we consider one stainless steel plate with a thickness of 4.763 mm (3/16 " or 0.1875 ") stamping , molding or die with am open descending concentric spiral channel with circular center - periphery, which finishes in the ducto (N°. 25. Figs. 9 and 10. Pp. 8/16 and 9/16) specially designed to allow the liquid flow in tangential way to the next evaporation unit. The heating surface has a truncated cone shape with an edge as flange or horizontal flat ring in along the mayor circunference base, the external diameter of this flat edge is equal to the piece 24a external diameter (Fig. 11. Pp. 10/16) , the width of this edge is 1/2 " greater than the width of piece 24a (Fig. 11. Pp. 10/16) therefore the cone mayor base diameter is equal to piece 24a internal diameter (Fig. 11. Pp. 10/16) less 1", this border has on its external part the rounds holes for the coupling bolts as the piece 24a (Fig. 11. Pp. 10/16) and in the internal part the round holes for the suitable cupling bolts cord pass, the slope of the conic part is determinated by the hydraulic gradient requested, from the center this conic part finishes at an horizontal flat flange edge shape being its big diameter 1" more to the piece 19a external diameter (Fig. 11. Pp. 10/16) , the flange width is equal to the piece 19a width plus 1/2 " mentioned , the small diameter is equal to the piece 19a internal diametre (Fig. 11.Pp. 10/16), this flange has round holes to permit the pass of coupling cord bolts placed in the piece 19a (Fig. 11. Pp. 10/16). In all the coupling between the parts there are fit material gasket (N°.18a and 18b. Fig. 11. Pp. 10/16) in order to made hermetical joints.

UPPERS STORES The uppers stores (Num. 17. Figs 10 and 11. Pp. 9/16 and 10/16) have an inverted T shape , build by two parts, one labeled as 17a (Fig. 11. Pp. 10/16) is the T axis, has a minimum thickness of 1/2 ", a minimum width of 4" and a suitable length to reach from the vessel section of the center to periphery shell (Fig. 14 and 15. Pp. 12/16) to the central tube support guide superior shell labeled as 16b (Fig. 11. Pp. 10/16), the part 17a (Fig. 11. Pp. 10/16) is vertically placed between two vertical supports labeled as 17c (Fig. 11. Pp. 10/16) or as part 44 (Fig. 15. Pp. 12/16) and fixed on its place by one conic pin , in both edges the part 17a (Fig. 11. Pp. 10/16) has the fit round holes. The piece 17b (Fig. 11. Pp. 10/16) is a T inverted arms shape with a minimum thickness of 1/2 ", minimum width of 4" and a long equal to the length existing between the vessel section from center to periphery internal diameter (N°. 40c. Fig. 15. Pp. 12/16) and the external diameter of part 16c ( Fig. 11. Pp. 10/16) of central tube support guide superior. The piece 17b (Fig. 11. Pp. 10/16) is welded on its medium part in all its long with the inferior border to the 1a piece 17a (Fig. 11. Pp. 10/16) ; the uppers stores rest by the piece 17b (Fig. 11. Pp. 10/16 ) inferior flat surface over the heating surface (N°. 20. Figs. 9, 10 and 11. Pags. 8/16, 9/16 and 10/16), there are a minimum of 6 uppers stores symetrically distributed over the heating surface.

CENTRAL TUBE SUPERIOR SUPPORT GUIDE The central tube superior support guide (N°. 16.Fig. 9, 10 and 11. Pp. 8/16, 9/16 and 10/16) is build by three pieces welded one to another, these are: 16a, 16b and 16c (Fig. 11.Pp. 10/16) . The piece 16c (Fig. 11. Pp. 10/16 ) is an horizontal flat flange with a minimum thickness of 1/2 ", width minimum 5" and with an internal diameter equal to piece 19b internal diameter (Fig. 11. Pp. 10/16) , on its medium part has the round holes corresponding to the cord bolts welded to the piece 19a (Fig. 11.Pp. 10/16) . Along its circunference in the internal face is welded and properly squared to the piece 16b (Fig. 11. Pp. 10/16). The piece 16b (Fig. 11. Pp. 10/16) is a vertical cylinder with a minimum thickness of 1/2 " with a fit height , it must be as minimum equal to the height of piece 24b (Fig. 11.Pp. 10/16) and with an internal diameter equal to the internal diameter of piece 19b (Fig. 11. Pp. 10/16), it is welded and properly squared by its inferior part to the piece 16c (Fig. 11. Pp. 10/16) and by its upper part with the piece 16a (Fig. 11. Pp. 10/16) . the piece 16a (Fig. 11. Pp. 10/16) is an horizontal flat flange with a minimum thickness of 1/2 " , width minimum 5" and an internal diameter equal to the piece 19b diameter (Fig. 11. Pp. 10/16), its upper face surface is flat in order to support the inferior part of calandria periphery - center internal shell. (N° 9b,. Fig. 8. Pp. 7/16).

BASIC EVAPORATORS STEAM INLET AND CONDENSATES OUTLET AND UNCONDENSABLES GAS OUTLET. The heating steam will be fed in one specific way in every basic evaporator, the same is for the condensates outlet and the uncondensables gas outlet, for these reasons we will describe the build up of each one.

BASIC EVAPORATOR PERIPHERY - CENTER STEAM INLET For the module from periphery to center, (Fig. 6, 7 and 8. Pags. 5/16, 6/16 and 7/16) the feeding steam will be made from four inlets (N°. 8. Figs. 6, 7 and 8. Pp. 5/16, 6/16 and 7/16) symetrically placed in the external shell (N°. 7a. Fig. 8 Pp. 7/16) ; if we consider from up to the bottom , the evaporator begins (Fig. 16. Pp. 13/16) by one basic evaporator from periphery to center module (Figs. 6, 7 and 8. Pp. 5/16, 6/16 and 7/16 and figs. 12 and 13. Pp. 11/16), in the first calandria the four steam inlets are connected with a header formed by a ring shape distribution pipe with a diameter bigger than the calandria's , this pipe is conected with the fed steam supply and it will have its feed control valves and security valves properly installed. In the following evaporators from periphery to center module calandrias (Figs. 6, 7 and 8. Pp. 5/16, 6/16 and 7/16) each one of four steam inlet s will be connected by tubes with their respective steam produced outlets (N°. 43, 43a y 43b . Figs. 14 and 15. Pp. 12/16) by one basic evaporator center - periphery module , the steam flow in the basic evaporator from periphery to center calandria ( Figs. 6, 7 and 8. Pp. 5/16, 6/16 and 7/16) will be from periphery to center.

BASIC EVAPORATOR PERIPHERY - CENTER CONDENSATES OUTLET The condensates outlet (N°. 12. figs. 6, 7 and 8. Pp. 5/16, 6/16 and 7/16) are build by tubes connected to the couples (N°. 12. Fig. 8. Pp. 7/16) which are welded on the calandria internal shell (N°. 9a. Fig. 8. Pag. 7/16) its number will be determinated by the volume of produced condensates , the mentioned tubes will trasspass the shell of the basic evaporator from center to periphery vessel section (N°. 40b . Fig. 14 and 15. Pp. 12/16) the tubes being welded on the external face in the bothsides of this shell in order to avoid leaks and then are prolonged outside to the evaporator section shell and connected on one header or external circular ring shape tube, the header diameter will be bigger than the evaporator's, this header will collect the condensates and transport them to the condensates store tank.

BASIC EVAPORATOR PERIPHERY CENTER MODULE UNCONDENSABLES GAS OUTLET The uncondensables gas outlet (N°. 11. Figs. 6, 7 and 8. Pp. 5/16, 6/16 and 7/16) is build by a drilled tube with nominal diameter of 1/2 " with a ring shape or circular header that will be supported by the internal shell below the part labeled as 9d ( Fig 8. Pag. 7/16), it has some outgoings symetrically placed that traspass the part 9a (Fig. 8. Pag. 7/16) and the shell of basic evaporator from center to periphery vessel ( N°. 40b. Figs. 14 and 15. Pp. 12/16) the tubes are been welded by its external face in boths sides of these walls in order to avoid leakage (N°. 64, 74, 84 and 94. Figs. 16, 17, 18 and 19. Pags 13/16, 14/16 15/16 and 16/16), in the outside of evaporator the uncondensables gas outlet has a control valve and will be connected to the atmosphere or general condenser according the case.

BASIC EVAPORATOR FROM CENTER TO PERIPHERY STEAM INLET The basic evaporator center - periphery steam inlets (Figs. 9, 10 and 11. Pags. 8/16, 9/16 and 10/16) only in the case that the equipment starts from up to down by one basic evaporator from center to the periphery (Figs. 17 and 19. Pp. 14/16 and 16/16), where the steam inlet of this first module will be by a header connected to the feeding steam supply by one control valve in order to introduce the feed steam to the central tube located in the central part of this unit through de inlets number 28, (Figs. 9, 10 and 11. Pp. 8/16, 9/16 and 10/16) symetrically placed in the internal shell 19b (Figs. 9, 10 and 11. Pags 8/16, 9/16 and 10/16) , in the following basic evaporators center - periphery calandrias (Figs. 9, 10 and 11. Pp. 8/16, 9/16 and 10/16 ) the steam feeding will be the steam produced by one basic evaporator from periphery to the center (Figs. 6, 7, 8 12 and 13. Pags. 5/16, 6/16, 7/16 and 11/16) and this steam will be fed naturally by the central tube (N°. 1. Figs 6, 7 and 8. Pp. 5/16, 6/16 and 7/16) to the steam inlets ( N°. 28. Figs. 9, 10 and 11. Pags. 8/16, 9/16 and 10/16) of the basic evaporator from center to periphery calandria (Figs. 9, 10 and 11. Pp. 8/16, 9/16 and 10/16), the steam flow inside of calandria will be from the center to periphery.

BASIC EVAPORATOR FROM CENTER TO PERIPHERY CONDENSATES OUTLET The outlet of condensates will be connected to the couples (N°. 22. Fig. 9, 10 and 11. Pp. 8/16, 9/16 and 10/16) and later can be connected with a header or external ring shape circular tube with a diameter greater than the evaporator's where the condensates can be collected and send to the condenser tank , this arregement is not shown in the figures because is an auxiliar equipment.

BASIC EVAPORATOR CENTER - PERIPHERY UNCONDENSABLES GAS OUTLET The outlet of uncondensables gas will be build by a circular header using a drilled tube of 1/2 " nominal diameter placed in the internal part and supported by the part 24a (Fig. 11. Pp. 10/16), will have symetrically placed outlets (N° 26. Figs. 9, 10 and 11. Pags. 8/16, 9/16 and 10/16 ) that will traspass the external shell in the part 24b (Fig. 11. Pag.10/16) forwardly they need to have a control valve and can be connected directly to the general condenser or send them freely to the atmosphere depends on the case.

EVAPORATOR VESSEL The evaporator vessel is build by sections. These sections have the same diameter but different design upon to its function, are called : Vessel from periferia to center section (Fig. 12 and 13. Pp. 11/16) and vessel from center to peripheria section (Figs. 14 and 15. Pp. 12/16). The vessel section which is placed over one heating unit from peripheria to center, ( Figs. 6,7 and 8. Pp. 5/16, 6/16 and 7/16), is called vessel from peripheria to center section, (Figs. 12 and 13. Pp. 11/16). The vessel section placed over one heating unit from center to peripheria (Figs. 9, 10 and 11. Pags 8/16, 9/16 and 10/16), is called vessel from center to peripheria section (Figs. 14 and 15. Pp. 12/16).

VESSEL FROM PERIPHERY TO CENTER SECTION. The vessel section that is over the basic evaporator from peripheria to center calandria (Fig. 12 and 13. Pp. 11/16 is formed by three parts which are 30a, 30b and 30c (Figs. 12 and 13. Pp. 11/16). The 30b part has a cylinder shape with a diameter equal to the diameter of the basic evaporator mentioned, with a suitable height., according to its position and function on the evaporator, for example, the first evaporator module has a maximum of 2.20 M. and in the followings basic evaporators from periphery to center have a minimum of 0.60 M. (N°. 56. Fig. 16. Pp. 13/169, in boths extremes, superior and inferior it has welded and properly squared flat flanges of a minimum thickness of 3/4 " and a minimum width of 10" with a medium diameter equal to the calandria medium diameter (Parts 30a and 30c; Figs. 12 and 13; Pp. 11/16 ) in such way , that in every flange exists an internal edge and one external border with a width of almost 4 3/4 " each one, in the medium part of every edge there are the corresponding rounds holes for the traspassing assemble bolts. Only when the evaporator begins from up to down with a basic evaporator from periphery to center this section of the vessel placed over the first unit of heating is joined by its upper part with the equipment circular cover (N°. 55 and 75. figs 16 and 18. Pags 13/16 and 15/16 ) and on its bottom with the basic evaporator periphery - center calandria (N°. 57 and 77, Figs. 16 and 18. Pp. 13/16 and 15/16). The evaporator cover ( N° 55 and 75. Figs 16 and 18. Pags 13/16 and 15/16) has the feeding liquid or evaporating solution inlet ( N°. 60 and 80. Figs 16 and 18. Pp. 13/16 and 15/16) , existing the option, not showed on the figures, that the feeding liquid or solution inlet could be trespassing the section 30b (Fig. 13. Pp. 11/16) if it is request . The rest basic evaporator vessel periphery - center sections (Fig. 12 and 13. Pp. 11/16) are assembled on top by the part 30a with the inferior part of the basic evaporator center - periphery calandria (figs. 9, 10 and 11. Pp. 8/16, 9/16 and 10/16) and on its bottom by the part 30c (Fig. 13. Pp. 11/16) and is assembled with the top of one basic evaporator periphery - center (Figs. 6, 7 and 8. Pp. 5/16, 6/16 and 7/16). The basic evaporator periphery - center sections (N°. 30. Fig. 13. Pp. 11/16) , have on its front two round sight glasses or round windows (N°. 31. Figs 12 and 13. Pp. 11/16), in order to observe the internal performance of the evaporator and in the back is installed one operator's inlet (N°. 32. Fig. 12. Pag. 11/16 ), turtle model usually used in the evaporators. In the internal border of the inferior flat flange (N°. 30c. Fig. 13. Pp. 11/16) also has the supports (N°. 33.Fig. 13.Pp. 11/!6) for the basic evaporator periphery - center uppers store (N°. 4. Figs. 6, 7 and 8. Pp. 5/16, 6/16 and 7/16).

BASIC EVAPORATOR CENTER - PERIPHERY VESSEL SECTION The vessel sections which are placed over the basic evaporators from center to periphery (Fig. 14 and 15. Pag. 12/16) are formed by three parts that are: 40a, 40b and 40c. The part 40b (Fig. 15. Pp. 12/16) has a cylindrical shape with a diameter equal to the piece 24b diameter (Fig. 11. Pp. 10/16) of the evaporation unit mentioned, with an suitable height at its position and function in the equipment, in the example this height is 3.60 M. On its bottom has welded and properly squared the part 40c (Fig. 15. Pp. 12/16) that is a flat flange with a minimum width of 10" and a minimum thickness of 3/4 " with a medium diameter equal to the medium diameter of part 40b (Fig. 15. Pp.12/16), on its external border it has a width appoximatly of 4 3/4 ", so as the internal border, it has in the medium part of both edges a serial of rounds holes in order to permit the traspassing of the coupling bolts to the basic evaporator center -periphery calandria (Figs. 9, 10 and 11. Pp. 8/16, 9/16 and 10/16). The part 40b has on top welded and properly squared the 40a part (Figs. 14 and 15. Pp. 12/16) which is an horizontal flat flange with a thickness minimum of 3/4 " , minimum width 10", with a medium diameter equal to the medium diameter of the part 40b (Fig. 15. Pp. 12/16), the internal border with a width approximatly of 4 3/4 "so as the external border, has a serial of round holes in order to permit the traspassing of the couplings bolts with the inferior part of one basic evaporator periphery - center calandria ( Figs. 6, 7 and 8. Pp. 5/16, 6/16 and 7/16 ) . From a distance of 2" below of the flange 40a (Fig. 14 and 15. Pp. 12/16), the part 40b (Fig. 15. Pp. 12/16) has symmetrically distributed four width and long horizontals slots, these are the steam produced outlets (N°. 43 . Fig. 15. Pp. 12/16 ) , in the example: these slots have a minimum width of 8" and a long of 24" ; these slots are connected to the internal part of one suitable conic box, welded on the external side of the vessel section shell. (N°. 40b. Fig. 15. Pp. 12/16) each one is connected by tubes, with a minimum diameter of 8", which transport the produced steam to the steam inlet to the next basic evaporator periphery - center calandria (N°. 8. Figs. 6,7 and 8. Pags 5/16, 6/16 and 7/16). In the front of the part 40b are two round sight glasses or round windows (N°. 41. Figs. 14 and 15. Pp. 12/16) and in the back is installed an operator's inlet turtle model; usually installed in the evaporators. In the part 40c the internal border has welded the upper store supports (N°. 44. Fig. 15. Pp. 12/16) of the unit from periphery to center , (N°. 17. Fig. 10 and 11. Pp. 9/16 and 10/16). Only when the evaporator begins with one basic evaporator from center to periphery ( Figs. 17 and 19. Pp. 14/16 and 16/16) with a general arrangement according to the second sequence, the upper vessel section part center - periphery (Figs. 14 and 15. Pp. 12/16) is coupled to the upper cover of the evaporator (N^{a} 65 and 85Figs. 17 and 19. Pp. 14/16 and 16/16), in the next basic evaporator center - periphery vessel sections (Fig. 14 and 15. Pp. 12/16) , they are connected to the bottom of one basic evaporator from peripheria to center calandria ( Figs. 6, 7 and 8. Pp. 5/16, 6/16 and 7/16). The evaporator upper cover ( N°. 65 and 85. Figs. 17 and 19. Pp. 14/16 and 16/16) has on its center the steam feeding inlet ( N°. 71 and 91. Figs. 17 and 19. Pags 14/16 and 16/16) and the liquid or solution feeding inlet ( N°. 70 and 90. Figs. 17 and 19. Pags 14/16 and 16/16).

BASIC INSTRUMENTATION. We shall install basic instrumentation such as: manometers and termometers in each calandria and on each basic evaporator vessel section , in the inlet of liquid feeding, in the inlet of steam feeding, also gate valves, safety valves and control valves where needed, these equipment is not shown on the figures.

## Claims

1. Evaporator with a heating surface formed by one open concentric descendent circular or rectangular spiral shape channel, wherein the evaporator is integrated by the alternative coupling of two basic evaporators modules in a number that depends on equipment working capacity that will be from 0.010 tons. per hour until 1000 tons. per hour, these basic evaporators are built each one by two parts that are the vessel evaporator section and the calandria, its heating surface being formed by one descendent open channel in shape of concentric circular or concentric rectangular spiral , it is possible to use according the case three models of open channel which are: a rectangular section with circular bottom, a rectangular section with flat bottom and a rectangular section with conic bottom, the channel having a width that could be from 0.001 m. to 0.50 m, which is determined by the evaporator working capacity ; in one of these module the descendent spiral channel is developed from the periphery to the central part of the heating surface and in the other module the descendent spiral channel is developed from the central part to the periphery part of the heating surface , the suitable coupling of these two basic evaporator modules produces that the heating surface of the evaporator is built as one unique open concentric descendent circular or rectangular spiral shape channel as heating surface, allowing the liquid, solution or substance on process, to circulate over the heating surface on each of the the modules from the up downwardly, starting from the feeding inlet placed in the first module, and finishing on the outlet of the last module placed on the down part, allowing that in a simultaneous way both the heating and evaporation of the liquid in proccess, increasing the evaporation due to the channel slope or hydraulic gradient, the hydraulic gradient could be from 0.01 M. per M to 0.600 M. per M., the liquid flow over the heating surface is uniform and continuous, increasing the convection and natural conduction , these former effect joined to a great interface area and the relatively small thickness of the liquid flow, increases the total heat transfer coefficient , increases the equipment thermal efficiency and saves energy, optimizing the evaporation process; by the another hand, due the design of the basic evaporators , the suitable coupling of these modules allows that the steam or heating fluid needed for the proccess has to be fed only in the first module calandria placed in the upper part of the evaporator, and the steam produced in this first module , is used to feed the calandria of the following module and so on until it reaches the last module , placed in the bottom of the evaporator, and finally the last steam produced passes to the condenser, the evaporator works on this way as a vacuum multiple effect, saving water used for condensation. The equipment is a modular evaporator, it is possible to build it in four different models according to the relative position of these modules inside the equipment , these models are: One. when the evaporator begin in its upper part with one basic evaporator module with a heating surface formed by one open descendent concentric spiral channel which is developed from the perphery area to center area of the heating surface it ends with a last evaporator basic module with heating surface formed by one open descendent concentric spiral chanel which is developed from periphery area to the center area of the heating surface. Two. When the evaporator begins on its upper part with a basic evaporator module with a heating surface formed by one open descendent concentric spiral channel which is development from the center area to the peripheria area of the heating surface it ends with one last basic evaporator module with a heating surface formed by one open descendent concentric spiral channel which is developed from the peripheria area to the center area of the heating surface. Three. When the evaporator starts on its upper part with a basic evaporator module with a heating surface formed by one open descendent concentric spiral channel which is developed from the periphery area to the center area of the heating surface it ends with one last basic evaporator module with a heating surface formed by one open descendent concentric spiral channel which is development from the central area to the periphery area of the heating surface. Four. When the evaporator begins on its upper part with a basic evaporator module with a heating surface formed by one open descendent concentric spiral channel which is developed from the central area to the periphery area of the heating surface it ends with one last basic evaporator module with a heating surface formed by one open descendent concentric spiral channel which is developed from the central area to the periphery area of the heating surface. This modular evaporators are for general use and they are posssible to be used as evaporator, to transform a liquid in steam; as destilator in the liquids purification; as evaporative condenser in the cooling of liquids; as cristalizer evaporator in order to increaser the size of crystals placed in suspension in a sobresatured solution of its mother liquor.

2. The evaporator according to claim 1, which is built in two main parts which are: the vessel of the basic evaporator and the calandria of the basic evaporator; and for having its heating surface formed by one open concentric circular or a rectangular spiral channel, this spiral is developed from the periphery area to the central area of the heating surface , this arrangement allows that the heating and the evaporation of the liquid or solution that is flowing over the heating surface can be done simultaneously , improving the thermal efficiency. The produced steam goes out of the basic evaporator by a tube or duct placed in the center of the calandria; this design allows that the produced steam can be used to feed the calandria of another basic evaporator coupling with this basic evaporator; working this system as a multiple effect system or in offside this basic evaporator can work as only evaporator if it is coupled on its upper part to a blind cover and the produced steam goes out to the atmosphere or to one condenser.

3. The basic evaporator according to claim 1, which is built in only two main parts that are: the vessel of the basic evaporator and the calandria and for having its heating surface formed by one open descendent concentric spiral , circular or rectangular channel, this spiral is developed from the central area to the periphery area of the heating surface, it allows that the heating and the evaporation of the liquor solution which flows over the heating surface can be done simultanously , improving the thermal efficiency and the design allowing that the produced steam , goes out by the inlets placed in the upper part of the basic evaporator vessel section, this steam can be used to feed the calandria of another basic evaporator coupling with itself , working this system as a multiple effect system mode or in offside this basic evaporator can work as an individual mode if it is coupled a blind tape in its upper part and the steam produced goes out directly to the atmosphere or to a condenser.

4. The evaporator modular models comprising a basic evaporator as claimed in claim 1, wherein these models are: One. When the evaporator starts on the upper part with a basic evaporator module with heating surface formed by one open descendent concentric spiral channel which is developed from theperiphery part to the central part of the heating surface and the evaporator ends with a last basic evaporator module with a heating surface formed by one open descendent concentric spiral channel which is developed from the periphery part to central part of the heating surface. Two. When the evaporator starts on its upper part with a basic evaporator module with heating surface formed by one open descendent concentric spiral channel which is developed from the central part to the periphery part of the heating surface and the evaporator ends with a last basic evaporator module with a heating surface formed by one open descendent concentric spiral channel which is developed from the periphery part to the central part of the heating surface. Three. When the evaporator starts in its upper part with a basic evaporator module with heating surface formed by one open descendent concentric spiral channel which is developed from the periphery part to the central part of the heating surface and the evaporator ends with a last basic evaporator module with a heating surface formed by one open descendent concentric spiral channel which is developed from the central part to the periphery part of the heating surface. Four. When the evaporator starts in its upper part with a basic evaporator module with heating surface formed by one open descendent concentric spiral channel which is developed from the central part to the periphery part of the heating surface and the evaporator ends with a last basic evaporator module with a heating surface formed by one open descendent concentric spiral channel which is developed from the central part to the periphery part of the heating surface.

5. The usage of the evaporator according to claim 1, wherein said evaporator is possible to be used as evaporator to transform a liquid in steam, as distillator withdrawing the condensates in the liquids purification; as evaporative condenser for cooling the liquids by means of an adiabatic evaporation; as a continuous crystalizer evaporator in order to increase the size of crustals placed in a suspension on an oversatured solution of its mother liquor.

## Patentansprüche

1. Verdampfer mit einer wärmeleitenden Oberfläche, gebildet durch einen offenen absteigenden Kanal in konzentrischer ringförmiger Spiralform oder in konzentrischer rechteckiger Spiralform. Der Verdampfer setzt sich aus zwei formschlüssigen grundlegenden Verdampfermodulen zusammen, deren Anzahl abhängig ist von der Arbeitsleistung der Anlage, die 0.010 Tonnen pro Stunde bis 1,000 Tonnen pro Stunde betragen kann. Diese grundlegenden Verdampfer bestehen jeweils aus zwei Teilen, die den Querschnitt des Verdampferkörpers und des Kalanders bilden. Ihre wärmeleitende Oberfläche ist aus einem offenen absteigenden Kanal in konzentrischer ringförmiger oder rechteckiger Spiralform gebildet. Man kann je nach Fall drei verschiedene Arten von offenen Kanälen verwenden, mit folgenden Formen: rechteckiger Querschnitt mit ringförmigem Grund, rechteckiger Querschnitt mit flachem Grund und rechteckiger Querschnitt mit konischem Grund. Dabei kann der Kanal 0.001 m bis 0.50 m breit sein, was von der Leistung des Verdampfers abhängt. In einem der Module führt der absteigende Kanal in Spiralform vom Aussenteil in Richtung des Zentralteils der wärmeleitenden Oberfläche und beim anderen Modul führt der absteigende Kanal in Spiralform aus dem Zentralteil der wärmeleitenden Oberfläche in Richtung Aussenteil, die formschlüssige Verbindung dieser zwei grundlegenden Verdampfermodule ergibt, dass die wärmeleitende Oberfläche des Verdampfers sich aus einer einzelnen wärmefeitenden Oberfläche zusammensetzt, in Form eines offenen absteigenden Kanals in ringförmiger Spiralform oder rechteckiger Spiralform. Dies ermöglicht, dass die Flüssigkeit, Lösung oder die zu verarbeitende Substanz über die wärmeleitende Oberfläche aller Module von oben nach unten fliesst, aber der Flüssigkeitseinspeisung, die sich im ersten Modul befindet, bis zum Ausgang des letzten Moduls, das sich im unteren Bereich befindet. So wird es möglich, dass die Erwärmung der eingeführten Flüssigkeit, sowie deren Verdampfung gleichzeitig stattfindet, dank dar Neigung des Kanals oder des hydraulischen Gradienten, der von 0.01 m pro Meter bis 0.600 m pro Meter sein kann, womit die Verdampfung gesteigert wird. Der Flüssigkeitsumlauf über die wärmeleitende Oberfläche ist durchgehend gleichmässig, was de natürliche Konvektion und Wärmeableitung begünstigt und zusätzlich wegen einer grossen Wärmetauschfläche und einer relativ dünnen Flüssigkeitsströmung den Wärmeübertragungskoeffizienten steigert. Dies verursacht die Zunahme der Gesamtwärmedurchgangszahl, wodurch der thermische Wirkungsgrad der Anlage verbessert, Energie eingespart und der Prozess der Verdampfung optimiert wird. Andererseits, dank des Designs des grundlegenden Verdampfers, ermöglicht die formschlüssige Verbindung dieser Module, dass der Dampf oder die warme Flüssigkeit, die für diesen Prozess erforderlich ist, nur in den Kalander des ersten Moduls eingeleitet werden muss, der sich im oberen Teil des Verdampfers befindet und der Dampf, der im ersten Modul erzeugt worden ist, dann in den Kalander des nächsten Module übertliesst und so weiter, bis das letzte Modul erreicht ist, das sich im unteren Teil des Verdampfers befindet. Von dort aus geht der erzeugte Dampf in einen Kondensator, weshalb der Verdampfer mit einem vervielfachten Vakuum-Effekt arbeitet, wodurch Wasser für den Kondensationsprozess gespart wird. Durch die modulare Bauweise kann der Verdampfer in vier verschiedenen Modellen hergestellt werden. Je nach Lage der Module in der Anlage sind das die folgenden Modelle: 1) Wenn der Verdampfer in seinemn Oberteil mit einem grundlegenden Verdampfermodul beginnt, dessen wärmeleitende Oberfläche gebildet wird durch einen offenen absteigenden Kanal in Spiralform, der aus dem Aussenteil in Richtung des Zentralteils der wärmeleitenden Oberfläche führt und mit einem letzten grundlegenden Verdampfermodul endet, dessen wärmeleitende Oberfläche durch einen offenen absteigenden Kanal in Spiralform gebildet wird, der aus dem Aussenteil in Richtung des Zentralteils der wärmeleitenden Oberfläche führt. 2) Wenn der Verdampfer in seinem Oberteil mit einem grundlegenden Verdampfermodul beginnt, dessen wärmeleitende Oberfläche gebildet wird durch einen offenen Kanal in Spiralform, der aus dem Zentralteil in Richtung des Aussenteils der wärmeleitenden Oberfläche führt und mit einem letzten grundlegenden Verdampfermodul endet, dessen wärmeleitende Oberfläche durch einen offenen absteigenden Kanal in Spiralform gebildrt wird, der aus dem Aussenteil in Richtung Zentralteil der wärmeleitenden Oberfläche führt. 3) Wenn der Verdampfer in seinem Oberteil mit einem grundlegenden Verdampfermodul beginnt, dessen wärmeleitende Oberfläche gebildet wird durch einen offenen absteigenden Kanal in Spiralform, der aus dem Aussenteil in Richtung des Zentralteils der wärmeleitenden Oberfläche führt und mit einem letzten grundlegenen Verdampfermodul endet, dessen wärmeleitende Oberfläche durch einen offenen absteigenden Kanal in Spiralform gebildet wird, der aus dem Zentralteil in Richtung des Aussenteils der wärmeleitenden Oberfläche führt. 4) Wenn der Verdampfer in seinem Oberteil mit einem grundlegenden Verdampfermodul beginnt, dessen wärmeleitenden Oberfläche gebildet wird durch einen offenen absteigenden Kanal in Spiralform, der aus dem Zentralteil in Richtung des Aussenteils der wärmeleitenden Oberfläche führt und mit einem grundlegenden Verdampfermodul endet, dessen wärmeleitende Oberfläche gebildet wird durch einen offenen absteigenden Kanal in Spiralform, der aus dem Zentralteil in Richtung des Aussenteils der wärmeleitenden Oberfläche führt. Dieser modular gebaute Verdampfer ist zum Allgemeingebrauch bestimmt; man kann ihn als Verdampfer gebrauchen, d.h. um Flüssigkeit in Dampf zu überführen, als Destillieranlage zur Flüssigkeitsreinigung, als Kühlanlage, zur Abkühlung von Flüssigkeiten; als Kristallisationsanlage zur Vergrösserung von Kristallen, die sich in einer übersättigten Lösung der Mutterlauge in Suspension befinden.

2. Der grundlegende Verdampfer nach Anspruch 1, **dadurch gekennzeichnet, dass** er sich ausschliesslich aus den folgenden zwei Hauptbestandteilen zusammensetzt: der grundlegende Verdampfer und der Kalander, deren wärmeleitende Oberfläche durch einen offenen absteigenden Kanal in konzentrischer Spiralform gebildet wird, der ringförmig oder rechteckig ist, und aus dem Aussenteil der wärmeleitenden Oberfläche in Richtung des Zentralteils derselben führt, was ermöglicht, dass die Erhitzung und die Verdampfung der Flüssigkeit oder Lösung, die auf der wärmeleitenden Oberfläche umläuft, gleichzeitig stattfinden, womit der thermische Wirkungsgrad verbessert wird. Der produzierte Dampf tritt aus dem grundlegenden Verdampfer über ein Rohr oder eine Leitung aus, die sich im Mittelteil des Kalanders befinden. Dieses Design ermöglicht, dass der erzeugte Dampf benutzt werden kann für die Einspeisung in den Kalander eines anderen grundlegenden Verdampfers, der seinerseits an einen anderen angeschlossen sein kann, wodurch eine Mehrfachwirkung erzielt wird; falls nicht vorhanden, kann dieser grundlegende Verdampfer einzeln arbeiten, soweit im Oberteil ein Verschlussdeckel angebracht wird und der erzeugte Dampf direkt in die Atmosphäre ausgestossen oder in einen Kondensator eingeführt wird.

3. Der grundlegende Verdampfer nach Anspruch 1, **dadurch gekennzeichnet, dass** er sich lediglich aus den beiden folgenden Hauptbestandteilen zusammensetzt: Aus dem Gehäuse des grundlegenden Verdampfers und aus dem Kalander und dessen wärmeleitender Oberfläche, gebildet durch einen offenen absteigenden Kanal in konzentricher Spiralform, ringförmig oder rechteckig,der aus dem Zentralteil der wärmeleitenden Oberfläche in Richtung des Aussenteils führt, was ermöglicht, dass die Erhitzung und Verdampfung der Flüssigkeit oder Lösung, die sich über die wärmeleitende Oberfläche bewegt, gleichzeitig stattfinden und der thermische Wirkungsgrad verbessert wird. Dieses Design ermöglicht, dass der erzeugte Dampf, der den Verdampfer durch die im Oberteil des Verdampferkörpers befindlichen Auslässe verlässt, benutzt werden kann für die Einspeisung in den Kalander eines anderen mit ihm verbundenen zusammengesetzten grundlegenden Verdampfers und somit eine Mehrfachwirkung erzielt wird, oder, falls nicht vorhanden, kann dieser grundlegende Verdampfer einzeln arbeiten soweit am im Oberteil einen Versclussdeckel anbringt und der erzeugte Dampf direkt in die Atmosphäre ausgestossen oder in einen Kondensator eingeführt wird.

4. Die Modelle des modularen Verdampfers, die einen grundlegenden Verdampfer nach Anspruch 1 beinhalten, wobei diese Modelle Folgendes umfassen: 1) Wenn der Verdampfer in seinem Oberteil mit einem grundlegenden Verdampfermodul mit wärmeleitender Oberfläche beginnt, die durch einen offenen absteigenden Kanal in Spiralform gebildet wird, der aus dem Aussenteil in Richtung Zentralteil der wärmeleitenden Oberfläche führt, und mit einem letzten grundlegenden Verdampfermodul endet, dessen wärmeleitende Oberfläche durch einen offenen absteigenden Kanal in Spiralform gebildet wird, der aus dem Aussenteil in Richtung des Zentralteils der wärmeleitenden Oberfläche führt. 2) Wenn der Verdampfer in seinem Oberteil mit einem grundlegenden Verdampfermodul mit wärmeleitender Oberfläche beginnt, das durch einen offenen Kanal in Spiralform gebildet wird, der aus dem Zentralteil in Richtung Aussenteil der wärmeleitenden Oberfläche führt und mit einem letzten grundlegenden Verdampfermodul endet, dessen wärmeleitende Oberfläche durch einen offenen absteigenden Kanal in Spiralform gebildet wird, der aus dem Aussenteil in Richtung des Zentralteils der wärmeleitenden Oberfläche führt. 3) Wenn der Verdampfer in seinem Oberteil mit einem grundlegenden Verdampfermodul mit wärmeleitender Oberfläche beginnt, die durch einen offenen absteigenden Kanal in Spiralform gebildet wird, der aus dem Aussenteil in Richtung Zentralteil der wärmeleitenden Oberfläche führt und mit einem letzten grundlegenden Verdampfermodul endet, dessen wärmeleitende Oberfläche durch einen offenen absteigenden Kanal in Spiralform gebildet wird, der aus dem Zentralteil in Richtung Aussenteil der wärmeleitenden Oberfläche führt. 4) Wenn der Verdampfer in seinem Oberteil mit einem grundlegenden Verdampfermodul mit wärmeleitender Oberfläche beginnt, die durch einen offenen absteigenden Kanal in Spiralform gebildet wird, der aus dem Zentralteil in Richtung Aussenteil der wärmeleitender Oberfläche führt und mit einem letzten grundlegenden Verdampfermodul endet, dessen wärmeleitende Oberfläche durch einen offenen absteigenden Kanal in Spiralform gebildet wird, der aus dem Zentralteil in Richtung Aussenteil der wärmeleitender Oberfläche führt.

5. Die Verwendungsmöglichkeiten des Verdampfers nach Anspruch 1, wonach dieser Verdampfer als Verdampfer genutzt werden kann, um Flüssigkeiten in Dampf zu überführen; als Destillieranlage, der die Kondensate für die Reinigung von Flüssigkeiten trennt; als Dampfkondensator zur Abkühlung von Flüssigkeiten durch eine adiabatische Verdampfung; als Verdampfer für einen kontinuierlichen Kristallisationsprozess, um Kristalle, die sich in einer übersättigten Lösung ihrer Mutterlauge in Suspension befinden, zu vergrössem.

## Revendications

1. Evaporateur avec une surface de chauffe formée par un canal circulaire descendant concentrique ouvert ou par un canal en forme de spirale, dans lequel l'évaporateur est intégré par l'accouplement alternatif de deux modules d'évaporateurs de base dont le nombre dépend de la capacité de travail de l'équipement allant de 0,010 tonnes à l'heure jusqu'à 1000 tonnes à l'heure ; ces évaporateurs de base sont formés chacun de deux parties, à savoir la partie de l'évaporateur qui est le récipient et la calandre, leur surface de chauffe étant formée par un canal descendant ouvert ayant la forme d'une spirale circulaire concentrique ou d'une spirale rectangulaire concentrique, il est possible d'utiliser, selon le cas, trois modèles de canal ouvert, en l'occurrence : une section rectangulaire à fond plat et une section rectangulaire à fond conique ; l'épaisseur du canal pouvant aller de 0,001 m à 0,50 m, ce qui est déterminé par la capacité de travail de l'évaporateur. Dans l'un de ces modules, le canal descendant en spirale évolue de la périphérie vers la partie centrale de la surface de chauffe et dans l'autre module, le canal descendant en spirale évolue de la partie centrale vers la partie périphérique de la surface de chauffe, l'accouplement adéquat de ces deux modules d'évaporateurs de base permet à la surface de chauffe de l'évaporateur d'être formée d'un seul et unique canal descendant ouvert en forme de spirale concentrique ou qu'un canal en forme de spirale rectangulaire représente la surface de chauffe, permettant au liquide, à la solution ou à la substance en cours de traitement de circuler sur la surface de chauffe sur chacun des modules, de haut en bas, en commençant par le tuyau d'arrivée qui se trouve dans le premier module, et en terminant par le tuyau de sortie du dernier module qui se trouve en bas, ce qui permet, d'une façon simultanée, à la fois le réchauffement et l'évaporation du liquide en cours de traitement, en augmentant l'évaporation due à l'inclinaison du canal ou au gradient hydraulique, le gradient hydraulique pouvant aller de 0.01 m par minute jusqu'à 0.600 m par minute, l'émanation du liquide sur la surface de chauffe étant uniforme et continue, ce qui augmente la convection et la conduction naturelle. Ce premier effet ajouté à une grande zone d'interface et à l'épaisseur relativement faible de l'écoulement du liquide augmente le coefficient de transfert de la chaleur totale, augmentant ainsi l'efficacité thermique de l'équipement, économisant l'énergie et optimisant le processus partie centrale vers la périphérie de la surface de chauffe. Ces évaporateurs modulaires sont d'usage courant et, par conséquent, ils peuvent être utilisés comme évaporateur pour transformer un liquide en vapeur; comme distillateur pour l'épuration des liquides ; comme condensateur d'évaporation dans le refroidissement des liquides; comme évaporateur de cristallisation afin d'augmenter la taille des cristaux placés en suspension dans une solution sursaturée de la solution alcoolique mère.

2. L'évaporateur est, selon la prétention 1, construit en deux parties principales, lesquelles sont : le récipient de l'évaporateur de base et la calandre de l'évaporateur de base, et vu que sa surface de chauffe est formée par un canal ouvert en spirale circulaire et concentrique ou rectangulaire, cette spirale évolue de la périphérie vers la partie centrale de la surface de chauffe. Disposition qui permet que le réchauffement et l'évaporation du liquide ou de la solution, émanant de la surface de chauffe, puisse avoir lieu simultanément, améliorant l'efficacité thermique. La vapeur produite sort de l'évaporateur de base par un tube ou un conduit placé au centre de la calandre ; cette conception permet à la vapeur produite d'être utilisée pour alimenter la calandre d'un autre évaporateur de base lorsqu'il y a accouplement avec cet évaporateur de base. Évaporateur de base qui fonctionne comme un système à effet multiple ou, application secondaire, peut fonctionner comme un simple évaporateur si sa partie supérieure est reliée à un couvercle hermétique et la vapeur produite va dans l'atmosphère ou dans un condensateur.

3. L'évaporateur est, selon la prétention 1, construit en deux parties principales seulement, lesquelles sont : le récipient de l'évaporateur de base et la calandre, et vu que sa surface de chauffe est formée par un canal descendant ouvert en forme de spirale circulaire concentrique ou rectangulaire, cette spirale évolue de la partie centrale vers la périphérie de la surface de chauffe, ce qui permet que le réchauffement et l'évaporation de la solution alcoolique émanant de la surface de chauffe, puisse avoir lieu simultanément, améliorant l'efficacité thermique et favorisant la sortie de la vapeur produite dans les tuyaux placés dans la partie supérieure du récipient de l'évaporateur de base, cette vapeur pouvant être utilisée pour alimenter la calandre d'un autre évaporateur de base accouplé à lui-même. Cet évaporateur de base est un système qui fonctionne selon un mode à effet multiple ou, application secondaire, peut fonctionner d'évaporation. D'autre part, en raison de la conception de l'évaporateur de base, l'accouplement adéquat de ces modules permet d'alimenter l'introduction de la chaleur ou du fluide de chauffage nécessaire au processus seulement dans la calandre du premier module située dans la partie supérieure de l'évaporateur et la vapeur produite dans le premier module est utilisée pour l'alimentation de la calandre du module suivant et ainsi de suite jusqu'à ce qu'il arrive au dernier module situé en bas de l'évaporateur, et finalement la dernière vapeur produite va dans le condensateur. L'évaporateur fonctionne donc de cette manière, comme à effet multiple et à vide, économisant l'eau utilisée pour la condensation. L'équipement est un évaporateur modulaire et il est possible d'en construire quatre modèles différents selon la position relative desdits modules à l'intérieur de l'équipement et ces modèles sont : Quand l'évaporateur commence, dans sa partie supérieure, par un module d'évaporateur de base avec une surface de chauffe formée par un canal descendant ouvert en forme de spirale concentrique qui évolue de la périphérie vers la partie centrale de la surface de chauffe et se termine par un dernier module d'évaporateur de base avec une surface de chauffe formée par un canal descendant ouvert en forme de spirale concentrique qui évolue de la périphérie vers la partie centrale de la surface de chauffe. Deux. Quand l'évaporateur commence, dans sa partie supérieure, par un module d'évaporateur de base avec une surface de chauffe formée par un canal descendant ouvert en forme de spirale concentrique qui évolue de la partie centrale vers la périphérie de la surface de chauffe et se termine par un dernier module d'évaporateur de base avec une surface de chauffe formée par un canal descendant ouvert en forme de spirale concentrique qui évolue de la périphérie vers la partie centrale de la surface de chauffe. Trois. Quand l'évaporateur commence, dans sa partie supérieure, par un module d'évaporateur de base avec une surface de chauffe formée par un canal descendant ouvert en forme de spirale concentrique qui évolue de la périphérie vers la partie centrale de la surface de chauffe et se termine par un dernier module d'évaporateur de base avec une surface de chauffe formée par un canal descendant ouvert en forme de spirale concentrique qui évolue de la partie centrale vers la périphérie de la surface de chauffe. Quatre. Quand l'évaporateur commence, dans sa partie supérieure, par un module d'évaporateur de base avec une surface de chauffe formée par un canal descendant ouvert en forme de spirale concentrique qui évolue de la partie centrale vers la périphérie de la surface de chauffe et se termine par un dernier module d'évaporateur de base avec une surface de chauffe formée par un canal descendant ouvert en forme de spirale concentrique qui évolue de la en mode individuel si sa partie supérieure est reliée à un couvercle hermétique et la vapeur sort directement dans l'atmosphère ou dans un condensateur.

4. Les modèles d'évaporateur modulaire comprenant un évaporateur de base comme il est demandé dans la prétention 1 et dans laquelle ces modèles sont : Un. Quand l'évaporateur commence, dans sa partie supérieure, par un module d'évaporateur de base avec une surface de chauffe formée par un canal descendant ouvert en forme de spirale concentrique qui évolue de la périphérie vers la partie centrale de la surface de chauffe et l'évaporateur termine par un dernier module d'évaporateur de base avec une surface de chauffe formée par un canal un canal descendant ouvert en forme de spirale concentrique qui évolue de la périphérie vers la partie centrale de la surface de chauffe. Deux. Quand l'évaporateur commence, dans sa partie supérieure, par un module d'évaporateur de base avec une surface de chauffe formée par un canal un canal descendant ouvert en forme de spirale concentrique qui évolue de la partie centrale vers la périphérie de la surface de chauffe et l'évaporateur termine par un dernier module d'évaporateur de base avec une surface de chauffe formée par un canal un canal descendant ouvert en forme de spirale concentrique qui évolue de la périphérie vers la partie centrale de la surface de chauffe. Trois. Quand l'évaporateur commence, dans sa partie supérieure, par un module d'évaporateur de base avec une surface de chauffe formée par un canal un canal descendant ouvert en forme de spirale concentrique qui évolue de la périphérie vers la partie centrale de la surface de chauffe et l'évaporateur termine par un dernier module d'évaporateur de base avec une surface de chauffe formée par un canal un canal descendant ouvert en forme de spirale concentrique qui évolue de la partie centrale vers la périphérie de la surface de chauffe. Quatre. Quand l'évaporateur commence, dans sa partie supérieure, par un module d'évaporateur de base avec une surface de chauffe formée par un canal un canal descendant ouvert en forme de spirale concentrique qui évolue de la partie centrale vers la périphérie de la surface de chauffe et l'évaporateur termine par un dernier module d'évaporateur de base avec une surface de chauffe formée par un canal un canal descendant ouvert en forme de spirale concentrique qui évolue de la partie centrale vers la périphérie de la surface de chauffe.

5. L'usage de l'évaporateur selon la prétention 1, dans laquelle il est dit qu'il est possible d'utiliser l'évaporateur comme : vaporisateur pour transformer un liquide en vapeur ; comme distillateur servant à retirer les condensats au cours de l'épuration des liquides ; comme condensateur d'évaporation pour refroidir l'évaporateur de cristallisation continue afin d'augmenter la taille des cristaux placés en suspension dans une solution sursaturée de la solution alcoolique mère.
